(19) Europäisches Patentamt
European Patent Office
Office européen des brevets

(11) **EP 2 682 722 A1**

(12) **EUROPÄISCHE PATENTANMELDUNG**

(43) Veröffentlichungstag:
**08.01.2014 Patentblatt 2014/02**

(51) Int Cl.:
***G01H 9/00*** *(2006.01)*

(21) Anmeldenummer: **12174619.2**

(22) Anmeldetag: **02.07.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **eesy-id GmbH
82166 Gräfelfing (DE)**

(72) Erfinder:
• **Fischer, Georg
90425 Nürnberg (DE)**

• **Kissinger, Dietmar
91054 Buckenhof (DE)**
• **Vinci, Gabor
91056 Erlangen (DE)**
• **Barbon, Francesco
91052 Erlangen (DE)**
• **Schmidt, Georg
82166 Gräfelfing (DE)**

(74) Vertreter: **Klinski, Robert
Patentship
Patentanwaltskanzlei
Elsenheimerstraße 65
DE-80687 München (DE)**

(54) **Verfahren zur Auslenkungserfassung**

(57)    Die vorliegende Erfindung betrifft ein Verfahren zur Auslenkungserfassung, mit den Schritten eines Aussendens (S101) eines Radarsignals (101) in Richtung einer Reflexionsfläche (103), eines Empfangens (S103) eines an der Reflexionsfläche (103) reflektierten Radarsignalanteils (105) und eines Bestimmens (S105) einer Auslenkung der Reflexionsfläche (103) auf der Basis des ausgesendeten Radarsignals (101) und des reflektierten Radarsignalanteils (105).

Fig. 1

EP 2 682 722 A1

Printed by Jouve, 75001 PARIS (FR)

**Beschreibung**

Die vorliegende Erfindung betrifft ein Verfahren zur Auslenkungserfassung und eine Radaranordnung zur Auslenkungserfassung.

Industrielle Erfassungsaufgaben erfordern oftmals eine Schwingungsanalyse, um beispielsweise mechanische Beanspruchungen in komplexen Industriemaschinen zu erfassen. Zum Beispiel liefert eine Schwingungsanalyse einer Gasturbine wertvolle Informationen über den mechanischen Zustand der Rotorblätter innerhalb der Turbine. Bei einem Betrieb dieser Maschinen entstehen systemcharakteristische, mechanische Resonanzen, deren Komponenten aus dem Audio- und Ultraschallspektrum durch geeignete akustische Sensoren überwacht werden können. Sobald beispielsweise die Turbine einer besonderen mechanischen Beanspruchung unterliegt oder ein unerwünschter Betrieb der periodisch rotierenden Antriebsstruktur vorliegt, erscheinen andere Resonanzfrequenzen in dem mechanischen Schwingungsspektrum. Beispielsweise steigen Ober- oder Unterwellen an oder charakteristische Frequenzkomponenten verschieben sich.

Zur kontaktlosen Erfassung von Schwingungen kann beispielsweise die Laser-Interferometrie eingesetzt werden. Die Laser-Interferometrie bietet eine hohe Auflösung, einen weiten dynamischen Bereich und eine gute Frequenzantwort. In schwieriger Umgebung, wie beispielsweise in industriellen Produktionsanlagen, ist diese Technik jedoch nicht geeignet. Ein Nachteil der optischen Messtechnik ist jedoch die Schwierigkeit, Staub und Nebel mit dem Laserstrahl zu durchdringen. Eine optische Diffusion in transparenten Ausbreitungsmedien verursacht Messfehler. Mit zunehmender Dichte gelöster Partikel im Ausbreitungsmedium wachsen Dämpfungs- und Streueffekte, so dass der Laser die Oberfläche des Untersuchungsobjektes nicht erreichen kann. Ein weiterer Nachteil ist, dass optische Bauteile, wie beispielsweise Linsen und Spiegel des Interferometers verschmutzen, wie beispielsweise in Umgebungen in denen störender Dampf, Wasser und Öl vorliegen.

Zur Erfassung von Schallschwingungen kann ferner eine akustische Membran eines Mikrofons eingesetzt werden. Die Membran wechselwirkt mit einer Umgebungsluft, in der sich diese Membran befindet. Sobald eine Schallquelle innerhalb eines bestimmten Bereichs Schallwellen verursacht, beginnt die Membran zu vibrieren. Die Membran wird von dem Audiosignal angeregt, das auf diese auftrifft. Die Schwingung oder Auslenkung der Membran kann mit einem Hochauflösungs-Schwingungsmessgerät beobachtet werden, so dass sich  wie bei einem herkömmlichen Mikrofon die Schallwellen rekonstruieren lassen. Allerdings kann das Gewicht der Spule in einem klassischen Mikrofon oder das Gewicht eines Permanentmagneten bei Moving Magnet Architekturen eingespart werden. Hochauflösungs-Auslenkungsmesstechnik ist daher ein wertvolles Werkzeug für eine große Anzahl von Abtastanwendungen.

Heutige Mikrofone basieren auf einer Detektion von Schwingungen einer in einem Mikrofon angebrachten Membran. Bei dynamischen Mikrofonen taucht eine an der Membran befestigte Spule in ein Magnetfeld ein. Hierdurch wird eine Spannung induziert, die die akustischen Schwingungen wiedergibt. Bei einem Elektret- oder Kondensatormikrofon wird die schwingende metallische Membran als eine Seite eines Kondensators verwendet, so dass sich eine veränderliche Kapazität ergibt. Durch eine elektrische Vorspannung (Bias) kann eine Wechselspannung an der Membran abgegriffen werden, die wiederum die akustischen Schwingungen wieder spiegelt. Mikrofone werden beispielsweise in der Produktionstechnik in der Audiotechnik aber auch bei der Lokalisierung von Schwingungen an Maschinen verwendet. Mechanische Systeme implizieren eine regelmäßige Wartung.

Auch bei der Herstellung von Maschinen werden oftmals Mikrofone verwendet, um akustische Schallquellen an Maschinenteilen zu finden. In diesem Fall ist jedoch die akustische Keule sehr breit, sodass es schwierig ist den genauen Ort der Schallentstehung zu lokalisieren. Im Unterhaltungselektronikbereich ist es vorteilhaft, kompakte Mikrofonanordnungen zur Aufnahme der Schallverteilung im Raum zu verwenden, beispielsweise für 3D-Multimedianwendungen.

Eine weitere Möglichkeit einer kontaktlosen Messung von Schallwellen beruht auf der Messung der optischen Durchlässigkeit von Rauch mittels einer Lichtschranke. Durch Schallwellen verändert sich die Dichteverteilung des Rauchs, die dann optisch vermessen wird. Die Rauchpartikel weisen ein verschwindendes Gewicht auf, so dass eine leichte Membran verwendet werden kann. Allerdings ist die Dynamik, d.h. das Verhältnis von lautestem zu leisestem akustischen Signal, wenig vorteilhaft. Daneben führen die natürlichen Fluktuationen des Rauchs zu starken Störsignalen.

Bei einem Laser-basierten Mikrofon wird ein optischer Laserstrahl beispielsweise auf eine Glasscheibe gerichtet, so dass die Schwingungen der Glasscheibe detektiert werden. Wird sichtbares Licht verwendet, kann der Laserstrahl erkannt werden. Wird hingegen nichtsichtbares Licht verwendet, ist die Ausrichtung des Mikrofons schwierig.

Bei der Messung von Schwingungen an Werkstücken und der Abtastung ausgedehnter Oberflächen, wird der Laser des Mikrofons mechanisch geschwenkt. Zur Schallaufnahme von 3D-Audiosignalen werden oftmals komplexe Anordnungen aus vielen Mikrofonen verwendet. Eine Bewegung einer Aufnahmemikrofonanordnung beispielsweise mit einer Kamerablickrichtung, um den visuellen und akustischen Eindruck synchron zu halten, ist schwierig.

Im Allgemeinen wird das Mikrofon daher mechanisch ausgerichtet. Zu diesem Zweck ist eine Mechanik vorgesehen, die regelmäßig gewartet wird. Bei einer Bewegung entstehen weitere Geräusche, beispielsweise Körperschall, die oftmals im Mikrofonsignal wieder zu finden sind. Zudem gestaltet sich die Abtastung großer Flächen schwierig, da mechanische Teile bewegt werden müssen.

Bei Elektret- oder dynamischen Mikrofonansätzen ist die Hauptkeule breit, wodurch eine genaue Lokalisierung von Schallquellen verhindert wird. Eine räumliche Erfassung des Schalls verlangt eine Vielzahl an Mikrofonen. Bei Surround-Schallaufnahmen, bei denen akustischer und visueller Eindruck übereinstimmen müssen, werden komplexe Mikrofonanordnungen bewegt.

Es ist die Aufgabe der vorliegenden Erfindung, ein effizientes Konzept zur Erfassung einer Auslenkung einer Fläche berührungslos zu schaffen.

Diese Aufgabe wird durch die Merkmale der unabhängigen Ansprüche gelöst. Vorteilhafte Weiterbindungsformen sind Gegenstand der Unteransprüche, der Beschreibung sowie der Zeichnungen.

Die Erfindung basiert auf der Erkenntnis dass zur Erfassung von Auslenkungen einer Reflexionsfläche und daher zur Erfassung von Schwingungen Radarwellen verwendet werden können. Radarwellen sind elektromagnetische Wellen im Funkbereich, die von metallischen Gegenständen reflektiert werden.

Die Verwendung von Radarwellen zur Abtastung von Auslenkungen erlaubt beispielsweise die Realisierung eines Radarmikrofons für akustische Anwendungen. Zu diesem Zweck kann eine gleichzeitig elektromagnetische Wellen reflektierende Membran verwendet werden. Durch den Schall wird diese Membran bewegt. Durch die Verwendung von Radarwellen wird wie bei der Verwendung eines Abstandradars die Schwingungsbewegung der Membran abgetastet.

Für akustische Anwendungen kann eine Abtastrate von 44 kSa/s verwendet werden und der Abstand der Membran über eine Zeitdauer von 1/44 kHz=22 μs gemittelt werden. Durch die Mittelung werden der Signal-Rauschabstand und damit die Dynamik verbessert sowie eine Rauschreduktion erreicht. Um eine Strahlschwenkung zu erreichen, können die Radarsignale einfach elektronisch durch Phased-Array-Techniken gedreht werden. Im Falle eines Mikrofons kann an den Orten, an denen der Schall aufgenommen wird, eine elektromagnetisch reflektierende Membran aufgehängt und die Radarwellen an diesen Orten konzentriert werden. Daneben ist eine Abtastung ausgedehnter Flächen zur Oberflächencharakterisierung durch elektronische Strahlschwenkung ebenfalls einfach möglich. Eine elektronische Schwenkung kann wesentlich schneller als eine mechanische Schwenkung erfolgen.

Durch die Verwendung von Radarstrahlen wird der Vorteil erreicht, dass der Mikrofonansatz eine nahezu beliebig leichte Membran erlaubt, was eine Minimierung von Aufnahmeverzerrungen ermöglicht. Der Signal-Rauschabstand kann durch Mittelung mehrerer Abstandsmessungen erhöht werden. Eine Schwenkung der Hauptkeule erfolgt nicht mehr mechanisch, sondern ist mittels elektronischer Strahlschwenkung möglich. Die Abtastung der Schwingungen an Oberflächen kann berührungslos erfolgen. Durch den Einsatz eines Radarstrahls kann die Schwingung an Oberflächen durch andere Materialien hindurch erfolgen. Derartige Zwischenmaterialien verändern üblicherweise die Akustik bei klassischen Mikrofonkonzepten. Die Erfassung der räumlichen Verteilung eines Schallbildes erfordert nicht mehr das Anbringen einer Vielzahl an Mikrofonen, sondern nur das Aufhängen einer Vielzahl an Membranen die mittels Strahlschwenkung ausgewählt werden können. Die Detektion schwingender Oberflächen von Körpern, die sich im Vakuum befinden ist ebenfalls möglich, beispielsweise im Weltall.

Die Radarstrahlen können ferner dazu eingesetzt werden, den Ort der Entstehung akustischer Signale oder von Schwingungen an einer Maschine zu lokalisieren. Hierbei ist es nicht unbedingt erforderlich, eine reflektierende Membran zu verwenden. Denn der Radarstrahl kann direkt zur Abtastung der Schwingungen der Oberfläche genutzt werden, da Maschinenteile zumeist aus Metall bestehen, das elektromagnetische Wellen reflektiert. Allerdings reflektieren auch dielektrische Werkstoffe Radarwellen, wie beispielsweise Kunststoffe. In diesem Fall ist ein Sprung der Permittivität $\varepsilon_r$ von Luft zu Material entscheidend.

Gemäß einem Aspekt wird die erfindungsgemäße Aufgabe durch ein Verfahren zur Auslenkungserfassung gelöst, mit den Schritten eines Aussendens eines Radarsignals in Richtung einer Reflexionsfläche, eines Empfangens eines an der Reflexionsfläche reflektierten Radarsignalanteils und eines Bestimmens einer Auslenkung der Reflexionsfläche auf der Basis des ausgesendeten Radarsignals und des reflektierten Radarsignalanteils. Dadurch wird beispielsweise der technische Vorteil erreicht, dass die Auslenkung einer Reflexionsfläche berührungslos über einen räumlichen Abstand hinweg erfasst werden kann. Diese Technik funktioniert sogar dann, wenn keine direkte optische Sichtlinie zum Untersuchungsobjekt vorliegt, da sich die Radarwellen auch in nebliger oder staubiger Luft ausbreiten können. Daneben können dicke und optisch nicht-transparente, dielektrische Platten oder nicht-metallische Abschirmungen von dem Radarsignal durchdrungen werden. Radarwellen sind elektromagnetische Wellen aus gekoppelten elektrischen und magnetischen Feldern.

In einer vorteilhaften Ausführungsform des Verfahrens wird das Radarsignal in Richtung der Reflexionsfläche gebündelt ausgesendet. Dadurch wird beispielsweise der technische Vorteil erreicht, dass sich die Ausnutzung des Radarsignals verbessert und die Intensität der an der Reflexionsfläche reflektierten Strahlen und die Strahlungsdichte in $W/m^2$ erhöht wird.

In einer weiteren vorteilhaften Ausführungsform des Verfahrens wird in dem Schritt des Bestimmens der Auslenkung eine Auslenkung aus einer Ruhelage der Reflexionsfläche bestimmt. Dadurch wird beispielsweise der technische Vorteil erreicht, dass die Ruhelage einen Referenzpunkt bildet, anhand dessen eine Auslenkung bestimmt werden kann.

In einer weiteren vorteilhaften Ausführungsform des Verfahrens wird in dem Schritt des Bestimmens der Auslenkung eine gleichanteilsfreie Auslenkung bestimmt, insbesondere durch Hochpassfilterung oder Bandpassfilterung zur Gleichanteilunterdrückung. Dadurch wird beispielsweise der technische Vorteil erreicht, dass ein Gleichanteil unterdrückt werden kann, der in vielen Anwendungen keine Rolle spielt, beispielsweise in der Audiotechnik oder bei einer Abtastung einer Maschinenoberfläche.

In einer weiteren vorteilhaften Ausführungsform des Verfahrens wird eine Ableitung der Auslenkung nach der Zeit bestimmt, um eine Schallschnelle zu bestimmen. Dadurch wird beispielsweise der technische Vorteil erreicht, dass ein Audiosignal abgeleitet und bestimmt werden kann.

In einer weiteren vorteilhaften Ausführungsform des Verfahrens werden mehrere Radarsignale in Richtung der Reflexionsfläche ausgesendet, mehrere an der Reflexionsfläche reflektierte Radarsignalanteile der ausgesendeten Radarsignale empfangen und auf der Basis der ausgesendeten Radarsignale und der empfangenen Radarsignalanteile ein Verlauf der Auslenkung der Reflexionsfläche über eine Zeit bestimmt. Dadurch wird beispielsweise der technische Vorteil erreicht, dass sich die Genauigkeit einer Bestimmung der Auslenkung verbessert.

In einer weiteren vorteilhaften Ausführungsform des Verfahrens wird ein Auslenkungsmittelwert aus den Auslenkungen bestimmt. Dadurch wird beispielsweise der technische Vorteil erreicht, dass ein durchschnittlicher Wert der Auslenkung ermittelt wird und mittels einer Vibrationsanalyse eine Belastung der Reflexionsfläche bestimmt werden kann.

In einer weiteren vorteilhaften Ausführungsform des Verfahrens wird die Reflexionsfläche mit einer vorbestimmten oder adaptiven Abtastrate abgetastet. Dadurch wird beispielsweise der technische Vorteil erreicht, dass die Auslenkung über einen Zeitraum hinweg periodisch ermittelt werden kann.

In einer weiteren vorteilhaften Ausführungsform des Verfahrens ist die Reflexionsfläche eine Teilfläche einer zusammenhängenden Gesamtfläche, und die Reflexionsfläche wird durch eine Rasterung eines Modells der Gesamtfläche bestimmt. Dadurch wird beispielsweise der technische Vorteil erreicht, dass die Auslenkung von Teilbereichen einer ausgedehnten Gesamtfläche bestimmt werden kann.

In einer weiteren vorteilhaften Ausführungsform des Verfahrens ist das Modell der Gesamtfläche eine digitale Abbildung der Gesamtfläche. Dadurch wird beispielsweise der technische Vorteil erreicht, dass die Steuerung der Rasterung auf Grundlage eines Computermodells erfolgen kann.

In einer weiteren vorteilhaften Ausführungsform des Verfahrens schließt die Reflexionsfläche unmittelbar an eine andere Reflexionsfläche der Gesamtfläche an oder die Reflexionsfläche ist von einer anderen Reflexionsfläche der Gesamtfläche beabstandet. Dadurch wird beispielsweise der technische Vorteil erreicht, dass die Auslenkung in einem zusammenhängenden Bereich oder einem räumlich getrennten Bereich erfasst werden kann.

In einer weiteren vorteilhaften Ausführungsform des Verfahrens wird die Reflexionsfläche durch eine Schwingmembran gebildet, welche ausgebildet ist, elektromagnetische Wellen zu reflektieren. Dadurch wird beispielsweise der technische Vorteil erreicht, dass die Reflexionsfläche Schwingungen aus der Luft aufnehmen kann.

In einer weiteren vorteilhaften Ausführungsform des Verfahrens wird die Auslenkung oder die Ableitung der Auslenkung nach der Zeit mit einem Schwellwert verglichen und ein Erreichen oder Überschreiten des Schwellwertes angezeigt. Dadurch wird beispielsweise der technische Vorteil erreicht, dass im Rahmen einer Vibrationsanalyse bei Überschreiten einer Auslenkung weitere Schritte eingeleitet werden können, beispielsweise Notmaßnahmen.

In einer weiteren vorteilhaften Ausführungsform des Verfahrens umfasst das Verfahren die Schritte eines Aussendens einer Mehrzahl von Radarsignalen in Richtung einer Mehrzahl von Reflexionsflächen, wobei jeweils ein Radarsignal gebündelt in Richtung einer Reflexionsfläche ausgesendet wird, eines Empfangen einer Mehrzahl von an den Reflexionsflächen reflektierten Radarsignalanteilen der Mehrzahl der ausgesendeten Radarsignale und eines Bestimmens der Auslenkung der jeweiligen Reflexionsfläche der Mehrzahl der Reflexionsflächen auf der Basis des in Richtung der jeweiligen Reflexionsfläche ausgesendeten Radarsignals und des an der jeweiligen Reflexionsfläche reflektierten Radarsignalanteils. Dadurch wird beispielsweise der technische Vorteil erreicht, dass die Auslenkung mehrerer Reflexionsflächen überwacht werden kann.

In einer weiteren vorteilhaften Ausführungsform des Verfahrens werden die Radarsignale in Richtung der Mehrzahl von Reflexionsflächen gleichzeitig oder zeitlich nacheinander, insbesondere durch eine Schwenkung einer gebündelten elektromagnetischen Welle, insbesondere Keulenschwenkung, in Richtung der jeweiligen Reflexionsfläche, ausgesendet. Dadurch wird beispielsweise ebenfalls der technische Vorteil erreicht, dass die Auslenkung mehrerer Reflexionsarten unter unterschiedlichen zeitlichen Bedingungen erfasst werden kann.

In einer weiteren vorteilhaften Ausführungsform des Verfahrens wird die Mehrzahl der Radarsignale durch eine Mehrantennenanordnung, insbesondere durch Phasenansteuerung der Mehrantennenanordnung zur Erzeugung schwenkbarer und gebündelter Radarsignale, erzeugt. Dadurch wird beispielsweise der technische Vorteil erreicht, dass sich die Radarsignale mit einfachen technischen Mitteln auf den Reflexionsflächen konzentrieren lassen.

In einer weiteren vorteilhaften Ausführungsform des Verfahrens ist die räumliche Anordnung der Reflexionsflächen vorbestimmt und die Reflexionsflächen werden mittels der Radarsignale abgetastet, um die Auslenkungen zu bestimmen. Dadurch wird beispielsweise der technische Vorteil erreicht, dass die Auslenkung an vorbestimmten Orten bestimmt werden kann und eine vordefinierte Einstellung der Radarsignale verwendet werden kann.

In einer weiteren vorteilhaften Ausführungsform des Verfahrens sind die Reflexionsflächen Teilflächen einer zusammenhängenden Gesamtfläche und die Teilflächen werden durch die Radarsignale abgetastet, um die Auslenkungen zu bestimmen. Dadurch wird beispielsweise der technische Vorteil erreicht, dass die Auslenkung von einzelnen Teilflächen bestimmt werden kann.

In einer weiteren vorteilhaften Ausführungsform des Verfahrens wird die Rasterung der zusammenhängenden Gesamtfläche anhand eines digitalen Modells der Gesamtfläche vorgegeben oder bestimmt. Dadurch wird beispielsweise der technische Vorteil erreicht, dass die Steuerung der Rasterung auf Grundlage eines Computermodells erfolgen kann.

In einer weiteren vorteilhaften Ausführungsform des Verfahrens werden die Auslenkungen mit einem Schwellwert verglichen und diejenigen Teilflächen optisch oder akustisch angezeigt, deren Auslenkungen den Schwellwert erreichen oder überschreiten. Dadurch wird beispielsweise der technische Vorteil erreicht, dass sich Teilflächen, die eine zu starke Auslenkung oder Beschleunigung aufweisen, einfach lokalisieren lassen.

In einer weiteren vorteilhaften Ausführungsform des Verfahrens sind die Auslenkungen zur Erfassung von Vibrationen eines Gegenstandes, insbesondere eines Werkstücks, einer Motor- oder Getriebeoberfläche, eines flächigen Werkstücks wie einer Schiffsplanke oder eines Fahrzeugkarosserieabschnitts, eines Gebäudeabschnitts, insbesondere einer Gebäudewand oder einer Fensterfläche bestimmt. Dadurch wird beispielsweise der technische Vorteil erreicht, dass die Auslenkungen von besonders schwingungsanfälligen Bauteilen erkannt werden können. Durch die Erkennung von Vibrationen einer Fensterfläche können beispielsweise Räume in Gebäuden abgehört werden.

In einer weiteren vorteilhaften Ausführungsform des Verfahrens sind die Reflexionsflächen, welche ausgebildet sind, elektromagnetische Wellen zu reflektieren und welche durch akustische Schallwellen auslenkbar sind, in einem dreidimensionalen Raum angeordnet und wobei die Reflexionsflächen zur Erfassung der Auslenkungen mit den Radarsignalen abgetastet werden, und wobei die erfassten Auslenkungen in ein räumliches akustisches Signal, insbesondere durch Ableitung nach der Zeit, überführt werden. Dadurch wird beispielsweise der technische Vorteil erreicht, dass sich Schallwellen an unterschiedlichen Positionen im Raum erfassen lassen.

In einer weiteren vorteilhaften Ausführungsform des Verfahrens wird das akustische Signal, insbesondere in Echtzeit, über ein Kommunikationsnetzwerk ausgesendet. Dadurch wird beispielsweise der technische Vorteil erreicht, dass sich die bestimmte Auslenkung ohne zeitliche Verzögerung weiterverarbeiten lässt.

Gemäß einem weiteren Aspekt wird die erfindungsgemäße Aufgabe durch eine Radarabtastfläche mit einer Schwingmembran gelöst, welche ausgebildet ist, Radarsignale zu reflektieren, einem starren Rahmen zur Halterung der Schwingmembran und einer Befestigung zur starren Befestigung der Radarabtastfläche an einer Raumwandung oder einem Stativ. Dadurch wird beispielsweise ebenfalls der technische Vorteil erreicht, dass sich Schallwellen besonders unverfälscht erfassen lassen.

Gemäß einem weiteren Aspekt wird die erfindungsgemäße Aufgabe durch eine Radaranordnung zur Auslenkungserfassung gelöst, mit einer Radareinrichtung zum Aussenden eines Radarsignals in Richtung einer Reflexionsfläche und zum Empfangen eines an der Reflexionsfläche reflektierten Radarsignalanteils und einem Prozessor zum Bestimmen einer Auslenkung der Reflexionsfläche auf der Basis des ausgesendeten Radarsignals und des reflektierten Radarsignalanteils. Dadurch werden die gleichen technischen Vorteile wie durch das entsprechende Verfahren erreicht, beispielsweise wie bei einem monostatischen gegenüber einem bistatischen Radar.

In einer vorteilhaften Ausführungsform der Radaranordnung umfasst die Radareinrichtung eine Mehrantennenanordnung und der Prozessor ist ausgebildet, die Mehrantennenanordnung zur Aussendung gerichteter Radarsignale anzusteuern. Dadurch wird beispielsweise der technische Vorteil erreicht, dass sich die Radarsignale an unterschiedlichen Positionen bündeln lassen.

In einer weiteren vorteilhaften Ausführungsform der Radaranordnung umfasst die Radareinrichtung ein 6-Tor-Interferometer (Six-Port) zur Erzeugung des Radarsignals und zum Empfang des reflektierten Radarsignalanteils. Dadurch wird beispielsweise der technische Vorteil erreicht, dass sich die Genauigkeit einer Bestimmung verbessert.

In einer weiteren vorteilhaften Ausführungsform der Radaranordnung ist die Radareinrichtung ausgebildet, eine Mehrzahl von Radarsignalen in Richtung einer Mehrzahl von Reflexionsflächen, insbesondere gleichzeitig oder in zeitlicher Abfolge auszusenden, wobei jeweils ein Radarsignal gebündelt in Richtung einer Reflexionsfläche ausgesendet wird, eine Mehrzahl von an den Reflexionsflächen reflektierten Radarsignalanteile der Mehrzahl der ausgesendeten Radarsignale zu empfangen, und der Prozessor ist ausgebildet, eine Auslenkung oder einen zeitlichen Verlauf der Auslenkung einer jeweiligen Reflexionsfläche der Mehrzahl der Reflexionsflächen auf der Basis des in Richtung der jeweiligen Reflexionsfläche ausgesendeten Radarsignals und des an der an der jeweiligen Reflexionsfläche reflektierten Radarsignalanteils zu bestimmen. Dadurch wird beispielsweise der technische Vorteil erreicht, dass die Auslenkung an mehreren Orten erfasst werden kann.

In einer weiteren vorteilhaften Ausführungsform der Radaranordnung ist der Prozessor ausgebildet, die Auslenkung nach der Zeit abzuleiten, um eine Schallschnelle oder einen zeitlichen Verlauf von Schallschnellen zu bestimmen. Dadurch wird beispielsweise der technische Vorteil erreicht, dass ein geeignetes Zeitsignal gewonnen werden kann.

In einer vorteilhaften Ausführungsform der Radaranordnung ist der Prozessor ausgebildet, die Auslenkung mit einem Schwellwert zu vergleichen und ein Erreichen oder ein

Überschreiten des Schwellwerts anzuzeigen, insbesondere auf einer Anzeige anzuzeigen. Dadurch wird beispielsweise der technische Vorteil erreicht, dass große Auslenkengen identifiziert werden können.

In einer vorteilhaften Ausführungsform ist die Radaranordnung eingerichtet, das oben beschriebene Verfahren auszuführen. Dadurch werden jeweils die gleichen technischen Vorteile wie durch das entsprechende Verfahren erreicht.

Gemäß einem weiteren Aspekt wird die erfindungsgemäße Aufgabe durch Verwendung der oben beschriebenen Radaranordnung als Radarmikrofon zur Erfassung von Schallsignalen gelöst, welche zumindest eine Reflexionsfläche auslenken. Dadurch wird beispielsweise der technische Vorteil erreicht, dass eine besonders gute Wiedergabetreue erreicht wird. Durch die Leichtigkeit der Membran ist die Erfassung von sehr hohen Frequenzen möglich, wie beispielsweise Frequenzen im Bereich des Ultra- oder Hyperschalls.

Gemäß einem weiteren Aspekt wird die erfindungsgemäße Aufgabe durch Verwendung der oben beschriebenen Radaranordnung zur Erfassung von Vibrationen eines Gegenstandes gelöst. Dadurch wird beispielsweise der technische Vorteil erreicht, dass unerwünschte Schwingungen eines Bauteils erfasst werden können.

Gemäß einem weiteren Aspekt wird die erfindungsgemäße Aufgabe durch ein Computerprogramm mit einem Programmcode zum Ausführen des oben beschriebenen Verfahrens gelöst, wenn das Computerprogramm auf einem Computer abläuft. Dadurch werden die gleichen Vorteile wie durch das entsprechende Verfahren erreicht.

Weitere Ausführungsbeispiele werden Bezug nehmend auf die Zeichnungen beschrieben. Es zeigen:

Fig. 1       eine schematische Ansicht einer Ausführungsform einer Radaranordnung;

Fig. 2       eine schematische Ansicht einer weiteren Ausführungsform einer Radaranordnung;

Fig. 3       eine schematische Ansicht einer weiteren Ausführungsform einer Radaranordnung;

Fig. 4       ein Blockdiagramm des Verfahrens;

Fig. 5       eine schematische Ansicht eines Sechs-Tor-Interferometers;

Fig. 6       eine schematische Ansicht einer Radaranordnung;

Fig. 7       ein schematisches Diagramm des Systems;

Fig. 8       einen Schaltplan einer Detektorschaltung;

Fig. 9       einen schematische Darstellung des Aufbau eines aktiven Tiefpassfilters;

Fig. 10      eine schematische Darstellung eines Rückkopplungsmoduls;

Fig. 11      eine schematische Darstellung des Aufbaus des Schaltungsbrettes;

Fig. 12      einen Verlauf einer linearen Bewegungsdetektion;

Fig. 13      den Verlauf einer hochgenauen Linearmessung; und

Fig. 14      eine Frequenzanalyse von Schwingungsmessungen.

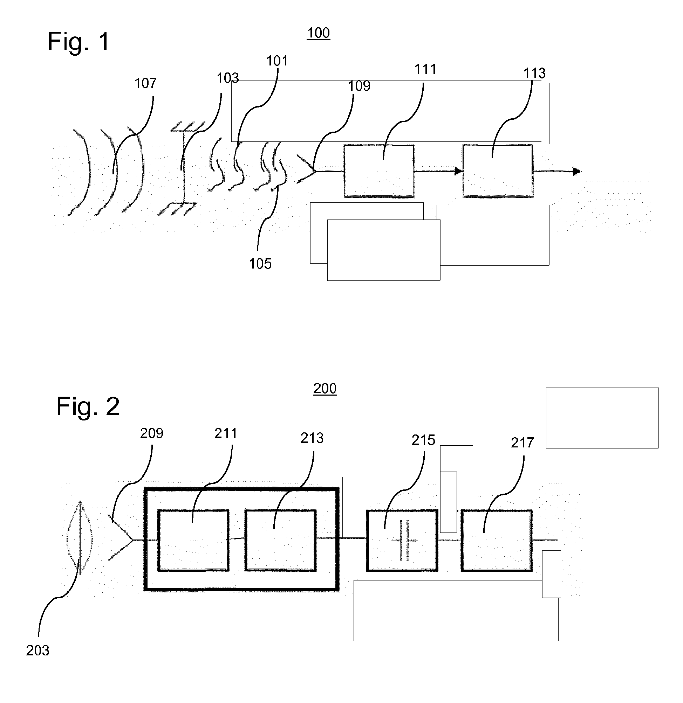

Fig. 1 zeigt eine schematische Ansicht einer Ausführungsform einer erfindungsgemäßen Radaranordnung 100 für ein Radarmikrofon. Die Radaranordnung 100 umfasst eine Sende- und Empfangsvorrichtung 111 für Radarwellen 101 und 105 mit einer Antenne 109. Daneben umfasst die Radaranordnung 100 eine Membran 103 zum Aufnehmen von Schallwellen 107 aus der Umgebungsluft und eine Mittelungsvorrichtung 113 zum Mitteln der bestimmten Auslenkungen der Membran 103. Durch die Radaranordnung 100 werden zeitgleich oder in zeitlicher Abfolge Radarsignale 101 in Richtung der durch die Membran gebildeten Reflexionsfläche 103 ausgesendet.

Die Radarwellen 101 werden von der Antenne 109 ausgesendet und treffen auf die Membran 103. Die Membran 103 kann eine hauchdünn metallisierte oder leitfähige Folie sein, die die Radarwellen 101 reflektiert. Vorteilhaft ist es, wenn die schwingende Fläche der Membran 103 möglichst leicht und elastisch ist, so dass Schwingungen möglichst unbeeinflusst von einer Trägheit der Membran 103 aus der Luft aufgenommen werden können.

Die reflektierten Radarwellen 105 werden von der Antenne 109 empfangen und an die Sende- und Empfangsvorrichtung 111 weitergeleitet. In der Sende- und Empfangsvorrichtung 111 wird anhand der der ausgesandten Radarwellen 101 und der reflektierten Radarwellen 105 eine Auslenkung der Membran 103 bestimmt. Zu diesem Zweck ist beispielsweise ein 6-Tor-Interferometer zur Überlagerung der gesendeten und empfangenen Radarsignale in der Sende- und Empfangsvorrichtung 111 vorgesehen. Die Radaranordnung 100 stellt somit eine Information über den Abstand der Membran 103 derart dar, dass ein kontinuierliches Abstandssignal gewonnen werden kann.

Durch die Radaranordnung 100 wird beispielsweise mit einer Abtast- oder Update-Rate von mindestens 44 kSa/s kontinuierlich ein Echtzeit-Abstandssignal über den Abstand oder die Auslenkung der Membran 103 gewonnen. Dadurch kann die Radaranordnung 100 den zeitlichen Verlauf der Auslenkung der Membran 103 bestimmen.

Allerdings kann die Abtastrate auch höher liegen, so dass eine Mittelung über eine größere Anzahl von Messpunkten erfolgt. Die Abtastrate kann zeitlich konstant gehalten werden oder variabel angepasst werden.

Die Mittelungsvorrichtung 113 mittelt die Abstandsinformation über eine Anzahl von Messpunkten, so dass ein Signal-zu-Rausch-Verhältnis verbessert wird. Werden beispielsweise 100.000 Messpunkte je Sekunde für die Auslenkung der Membran 103 ermittelt, kann über jeweils 5 Messpunkte von der Mittelungsvorrichtung 113 ein Mittel gebildet werden. In diesem Fall ergeben sich 20.000 Abstandswerte aus denen ein Audiosignal rekonstruiert werden kann. Im Allgemeinen kann durch die Mittelungsvorrichtung 113 ein gleitender oder ein absoluter Mittelwert gebildet werden. Beispielsweise kann ein variabler Mittelwert bei einem gleitenden Fenster gewonnen werden. Durch diese Maßnahmen wird das Rauschverhältnis des Audiosignals verbessert.

Aus einer Ableitung der Auslenkung nach der Zeit kann eine Schallschnelle bestimmt werden, so dass ein Audiosignal ermittelt werden kann. Die Ableitung ist unabhängig von der im Einzelfall verwendeten Radararchitektur.

Die Schallschnelle gibt an, mit welcher Wechselgeschwindigkeit die Luftteilchen oder Teilchen eines anderen Schallübertragungsmediums um ihre Ruhelage schwingen.

Die Schallschnelle ist über die Euler-Gleichung mit dem Schalldruck verknüpft. Dieser Umstand kann bei der Bestimmung der Schallintensität, dem Produkt von Schallschnelle und Schalldruck verwendet werden. Bei einer ebenen fortschreitenden Welle sind Schallschnelle und Schalldruck phasengleich.

Die gewonnenen Audiodaten können dann in Echtzeit, beispielsweise ohne Zwischenspeicherung oder wesentliche Verzögerung, in einem Kommunikationsnetzwerk weitergeleitet werden.

Fig. 2 zeigt eine schematische Ansicht einer weiteren Ausführungsform einer erfindungsgemäßen Radaranordnung 200. Die Radaranordnung 200 umfasst eine Membran 203, eine Sende- und Empfangsvorrichtung 211 mit einer Antenne 209 und eine Mittelungsvorrichtung 213. Zusätzlich zu der in Fig. 1 gezeigten Ausführungsform umfasst die Radaranordnung 200 einen DC-Block 215 und einen Tiefpass 217.

Da im Grundabstand zwischen der Membran 203 und der Radarantenne 209 keine Audioinformation enthalten ist, kann eine Unterdrückung des Gleichanteils mit dem DC-Block 215 erfolgen, der beispielsweise einen vorbestimmten Abstand von dem Messwert subtrahiert. Bei der Abstandsmessung tritt ansonsten eine Mehrdeutigkeit mit einer Periode von $2\pi$ auf.

Um das Rauschverhältnis noch weiter zu verbessern, ist der Tiefpass 217 vorgesehen, dabei einer Audio-Anwendung nur Frequenzanteile bis 20 kHz hörbar sind. Der Tiefpass 217 mit einer Grenzfrequenz von 20 KHz filtert mittels einer Tiefpass-Filterung höhere Frequenzen aus dem Audiosignal heraus. Statt der gezeigten monostatischen Radaranordnung mit nur einer Antenne kann jedoch auch eine multistatische Radaranordnung mit getrennten Antennen für Senden und Empfangen verwendet werden.

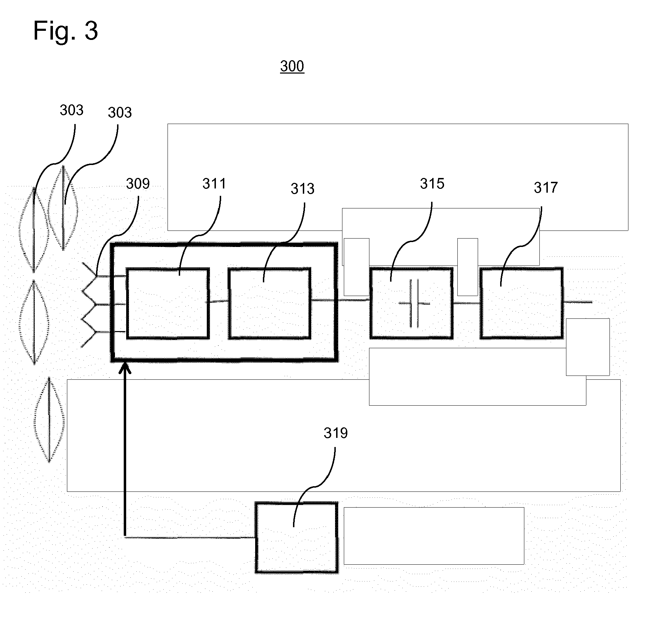

Die in Bezug auf Fig. 1 und Fig. 2 erläuterte Architektur kann derart erweitert werden, dass der ausgesendete Radarstrahl mittels elektronischer Maßnahmen geschwenkt werden kann. Fig. 3 zeigt eine schematische Ansicht einer weiteren Ausführungsform einer erfindungsgemäßen Radaranordnung 300.Die Radaranordnung 300 umfasst mehrere Membranen 303, eine Sende- und Empfangsvorrichtung 311 mit mehreren Antennen 309 und eine Mittelungsvorrichtung 313. Ein DC-Block 315 unterdrückt den Gleichanteil, während ein Tiefpass 317 hohe Frequenzen des gewonnenen Audiosignals filtert.

Zusätzlich umfasst die Radaranordnung eine Steuerungsvorrichtung 319 zur Steuerung der Strahlschwenkung. Mittels der Steuerungsvorrichtung 319 wird der Radarstrahl auf jeweils eine der Membranen 303 gelenkt, so dass nur die Bewegungen dieser Membran 103 abgetastet werden. Die Antennen 309 dienen in diesem Fall als Arrayantenne.

Eine Arrayantenne ist eine phasengesteuerte Gruppenantenne mit starker Richtwirkung, die eine Bündelung der Strahlungsleistung durch die Anordnung und Verschaltung von Einzelstrahlern erreicht. Wenn sich die Einzelstrahler unterschiedlich ansteuern lassen, ist das Antennendiagramm der Antenne elektronisch schwenkbar.

Beispielsweise kann jede Antenne 309 durch die Steuerungsvorrichtung 319 über eine Phasenansteuerung unabhängig von den anderen Antennen 309 mit einer bestimmten Phase angesteuert werden. Durch die geeignete Überlagerung der von den einzelnen Antennen ausgestrahlten elektromagnetischen Wellen, lässt sich der Radarstrahl an vorgesehenen Stellen bündeln oder fokussieren, so dass sich nacheinander die im Raum angebrachten Membranen 303 abtasten lassen. Durch die an vorbestimmten Orten angeordneten Membranen 303 ist eine Raumschallfelderfassung möglich.

In anderen Ausführungsformen der Erfindung ist es im Allgemeinen nicht erforderlich, eine reflektierende Membran zu verwenden, sondern es können Auslenkungen beliebiger reflektierender Oberflächen verwendet werden.

Beispielsweise ist es möglich, mittels der erfindungsgemäßen Radaranordnung die Auslenkung oder Schwingungen von metallischen Maschinenteilen zu bestimmen. Dazu wird das Radarsignal auf den Maschinenteil gerichtet und das von dem Maschinenteil reflektierte Radarsignal wird erfasst. Durch dieses Verfahren lassen sich nicht nur dynamische Auslenkungen und Abstände, sondern auch überwiegend statische Auslenkungen, wie beispielsweise thermische Ausdehnungen, erfassen. Die Erfassung von Schwingungen ist nicht auf den hörbaren Bereich beschränkt, sondern grundsätzlich ist es ebenfalls möglich, auch Schwingungen von Maschinenteilen im Ultraschallbereich oder Infraschallbereich unterhalb des hörbaren Bereichs von 20 Hz zu erfassen. Ebenfalls ist es möglich, eine zeitliche Änderung einer Ruhelage zu bestimmen, beispielsweise bei Maschinenschwingungen.

Durch eine Schwenkung des Radarstrahls mittels einer Arrayantenne lassen sich auch größere Oberflächen abtasten. In diesem Fall kann eine Abtastung einer größeren Oberfläche sequentiell in Teilbereichen der Oberfläche erfolgen. Um den Strahl geeignet auf den jeweiligen Teilbereich richten und fokussieren zu können, kann ein digitales Modell der Gesamtfläche vorgegeben werden, aus dem ausgehend von der Antenne oder einem Referenzpunkt eine Richtung und eine grobe Entfernung des jeweiligen Teilbereiches bestimmt wird. Anhand der aus dem Computermodell bestimmten Richtung und Entfernung lässt sich ein Radarstrahl auf den gewünschten Teilbereich richten, so dass dessen Auslenkung bestimmt werden kann.

Überschreitet die Auslenkung oder die Schwingungsamplitude eines Teilbereiches einen vorgegeben Wert, so kann für den Teilbereich ein Anzeigesignal ausgegeben werden, das auf das Überschreiten des zulässigen Wertes hinweist. Ein derartiges Anzeigesignal kann beispielsweise ein optisches oder ein akustisches Signal sein. In einer anderen Ausführungsform wird der Teilbereich einer Oberfläche mittels einer Leuchtvorrichtung angeleuchtet, bei dem die Auslenkung oder die Schwingungsamplitude einen Schwellwert überschreitet.

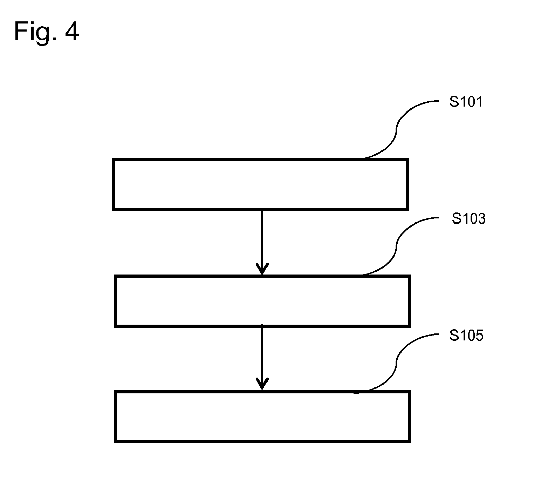

Fig. 4 zeigt ein Blockdiagramm des erfindungsgemäßen Verfahrens. Im ersten Schritt S101 wird ein Radarsignal 101 in Richtung einer Reflexionsfläche 103 ausgesendet. Im zweiten Schritt S103 wird der an der Reflexionsfläche 103 reflektierte Radarsignalanteil 105 empfangen. Im dritten Schritt S105 wird eine Auslenkung der Reflexionsfläche 105 auf der Basis des ausgesendeten Radarsignals 101 und des reflektierten Radarsignalanteils 105 bestimmt.

Im Folgenden wird eine mögliche Realisierung des erfindungsgemäßen Verfahrens beschrieben.

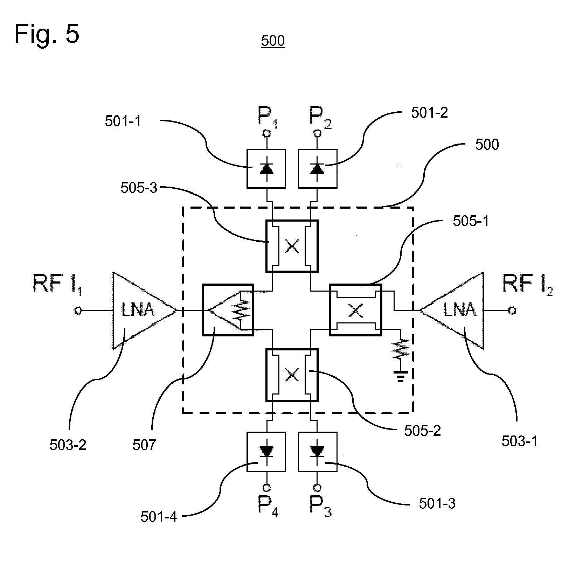

Fig. 5 zeigt eine schematische Ansicht eines Sechs-Tor-Interferometers 500. Das Sechs-Tor-Interferometer 500 umfasst die Mikrowellenkoppler 505-1, 505-2, 505-3 und 507. Die beiden Eingangssignale $RFI_1$ und $RFI_2$ werden zunächst durch die rauscharmen Verstärker 503-1 und 503-2 (LNA- Low Noise Amplifier) verstärkt und dann dem Sechs-Tor-Interferometer 500 zugeführt. Das Sechs-Tor-Interferometer 500 überlagert die beiden Eingangssignale RFI1 und RFI2 mit unterschiedlichen Phasenverschiebungen. Für diese Phasenverschiebungen können unterschiedliche Winkel gewählt werden, wie beispielsweise vier relative Phasenverschiebungen von $0\pi$, $0.5\pi$, $1\pi$ und $1.5\pi$. Durch gemeinsame Dioden-Leistungsdetektoren 501-1, 501-2, 501-3 und 501-4 (Diode Power Detector) werden die Ausgangssignale in ein Basisband umgesetzt.

Der technische Vorteil des Sechs-Tor-Interferometers 500 ist die passive Signalüberlagerung in der Mikrowellendomäne, die hochgenaue Messergebnisse sicherstellt. Darüber hinaus ist die Komplexität der Schaltung im Vergleich zu allgemeinen Empfängerarchitekturen geringer, da lediglich Mikrowellenkoppler und einfach konstruierte Dioden-Leistungsdetektoren verwendet werden. Im Allgemeinen führt das zu vier unterschiedlichen Ausgangssignalen, die aus einer destruktiven oder konstruktiven Interferenz der zwei Eingangssignale resultieren. Daher hängt die Leistung des resultierenden Ausgangssignals hochgenau mit der relativen Phasenverschiebung des Eingangssignals zusammen. Um diese Abhängigkeit zu analysieren, werden die Dioden-Leistungsdetektoren 501-1, 501-2, 501-3 und 501-4 verwendet. Die Dioden-Leistungsdetektoren 501-1, 501-2, 501-3 und 501-4liefern die Spannungen P1, P2, P3 und P4, die jeweils proportional zu der Leistung der erfassten Signale sind.

Die Spannungen P1, P2, P3 und P4 hängen direkt mit der Phasenverschiebung zwischen den Eingangssignalen zusammen, durch:

$$\sigma = \tan^{-1}\left(\frac{P_1 - P_2}{P_3 - P_4}\right). \tag{1}$$

Das Ziel der vorliegenden Erfindung ist es, eine Auflösung einer Auslenkung einer Reflexionsfläche im Mikrometerbereich und darunter zu erreichen, um beispielsweise Vibrationsmessungen für unterschiedliche Audioanwendungen durchzuführen. Dieses Ziel wird mit einer relativ niedrigen Mikrowellenfrequenz von 24 GHz erreicht.

Die vorliegende Erfindung ermöglicht ein passives Sechs-Tor-Interferometer-RF-Frontend, das mit einem kontinuierlichen Wellensignal (CW-Signal) bei 24 GHz arbeitet.

Unter Verwendung von Radartechnik wird ein Phasenunterschied zwischen einer Referenz und dem zurückgestreuten Funkfrequenzsignal (RF-Signal) gemessen. Dabei wird das Sechs-Tor-Interferometer 500 verwendet, um die relative Phasenmessung durchzuführen.

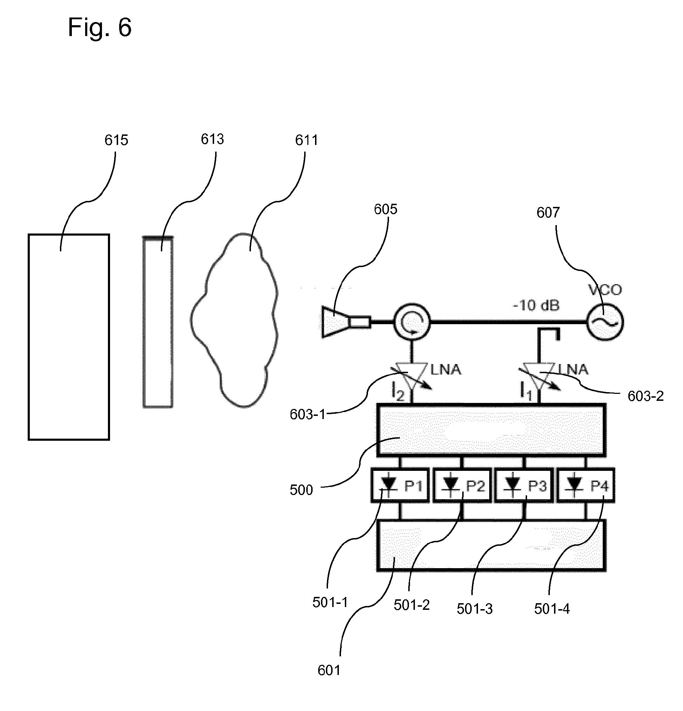

Fig. 6 zeigt eine schematische Ansicht einer Radaranordnung. Die Sende- und Empfangsantenne 605 sendet elektromagnetische Wellen zu dem Ziel 615 und empfängt die von dem Ziel 615 zurückreflektierten Wellen. Ein spannungsgesteuerter Oszillator 607 liefert hierzu eine Wechselspannung mit einer geeigneten, einstellbaren Frequenz.

Zwischen der Sende- und Empfangsantenne 605 kann sich eine nicht-metallische Abschirmung 613 oder Nebel 611 befinden, ohne dass hierdurch die Ausbreitung der elektromagnetischen Wellen behindert wird.

Die zwei eingehenden Signale I1 als interne Signalreferenz und I2 als das zurückgestreute Signal des Zieles 615 werden mit unabhängigen, variablen Abschwächern oder rauscharmen Verstärkern 603-1 und 603-2 (LNA -Low-Noise-Amplifier) abgeschwächt oder verstärkt und dann in die zwei Eingänge des Interferometers 500 gespeist. Das Sechs-Tor-Interferometer 500 gibt die gewonnenen Phasenverschiebungen über die Dioden-Leistungsdetektoren 501-1 bis 501-4 an ein Erfassungssystem und eine digitale Signalverarbeitung (DSP) 601 aus.

Die relative Entfernungsauslenkung des Ziels 615 kann über die Übertragungswellenlänge λ berechnet werden, durch:

$$d = \frac{\sigma \, \lambda}{2 \, \pi}.$$

$$(2)$$

Die Entfernungsmessung d ist relativ bezüglich einer Periode der verwendeten Wellenlänge λ. σ ist die ermittelte Phasenverschiebung.

Eine absolute Entfernungsmessung kann mit der Verwendung eines Dualtonsignals durchgeführt werden. In einer weiteren Ausführungsform kann eine duale Vorrichtung implementiert werden.

Um eine Schwingung aufzuzeichnen, wird lediglich eine kleine, relative Auslenkung des Zieles 615 gemessen. Es ist daher möglich, ein einfaches kontinuierliches Signal (CW - Continuous Wave) mit einem einzelnen Frontend bei einer spezifischen Funkfrequenz zu verwenden.

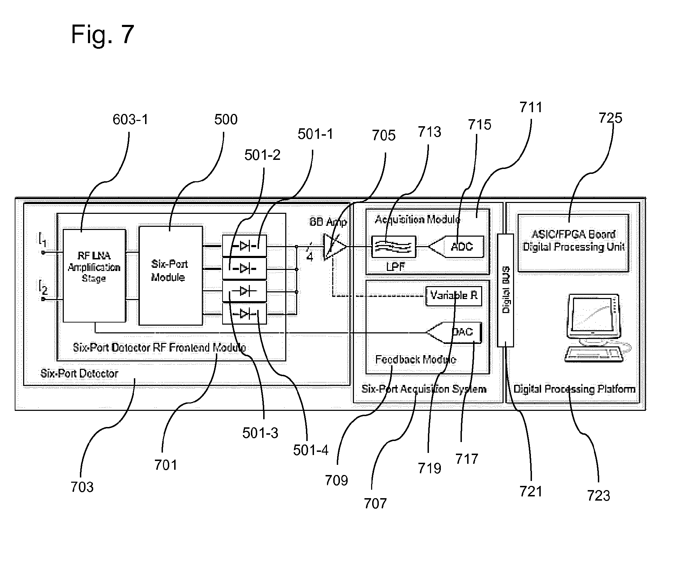

Fig. 7 zeigt ein schematisches Diagramm des Systems. Das Eingangssignal I1 bildet die Signalreferenz. Das Signal I2 ist das zurückgestreute Signal. Das Sechs-Tor-Detektor-RF-Frontendmodul 701 wird durch das Sechs-Tor-Interferometer-Modul 500, die Dioden-Leistungsdetektoren 501-1, 501-2, 501-3 und 501-4 und eine RF-LNA-Verstärkungsstufe 603-1. Das Sechs-Tor-Interferometer-Modul 500 weist vier Ausgänge auf, die durch die Leistungsdetektoren 501-1, 501-2, 501-3 und 501-4 in ein Basisband umgesetzt werden. Der Sechs-Tor-Detektor 703 weist neben dem Sechs-Tor-Detektor-RF-Frontendmodul 701 eine Basisband-Verstärkungsstufe 705 auf, die die vier von den Leistungsdetektoren 501-1, 501-2, 501-3 und 501-4 ausgegebenen Signale über einen analogen Ausgang weiterleitet.

Das Sechs-Tor-Erfassungssystem 707 basiert auf zwei unabhängigen Modulen, einem Rückkopplungsmodul 709 (Feedback-Modul) und einem Erfassungsmodul 711. Der Zweck des Erfassungssystems 707 ist es, die vier Ausgangsspannungssignale zu erfassen, die von dem Sechs-Tor-Detektor 703 zugeführt werden. Das Rückkopplungsmodul 709 wird stattdessen verwendet, um die Verstärkung der RF-LNA-Verstärkungsstufe 603-1 und des Basisbandverstärkers 705 zu steuern, um die besten Arbeitsbedingungen einzustellen.

Das Erfassungsmodul 711 umfasst ein Tiefpassfilter 713 (LPF), der Signalkomponenten mit hohen Frequenzen herausfiltert. Daneben umfasst das Erfassungsmodul 711 einen Anlog-zu-Digitalumsetzer 715 (ADC), der das analoge Signal in ein digitales Signal zur Weiterverarbeitung umsetzt. Das Rückkopplungsmodul 709 dient zur Steuerung der RF-Verstärkungsstufen 603-1 und der Basisbandverstärkung durch die Basisband-Verstärkungsstufe 705. Zu diesem Zweck umfasst das Rückkopplungsmodul 709 einen Digital-zu-Analogumsetzer 717 (DAC) und einen variablen Widerstand 719. Durch das Rückkopplungsmodul 709 wird ein Weg von der Digitaldomäne zurück zu der Analogschaltung implementiert.

Über einen Digitalbus 721 werden die digitalen Signale einer Digitalverarbeitungsplattform 723 zugeführt. Die Digitalverarbeitungsplattform 723 umfasst eine Digitalverarbeitungseinheit 725 auf einer Platte mit einer anwendungsspezifischen integrierten Schaltung und einer im Feld programmierbaren (Logik-)Gatter-Anordnung (ASIC/FPGA). Diese Signalverarbeitungsarchitektur führt Berechnungen und Kalibrierungsroutinen aus.

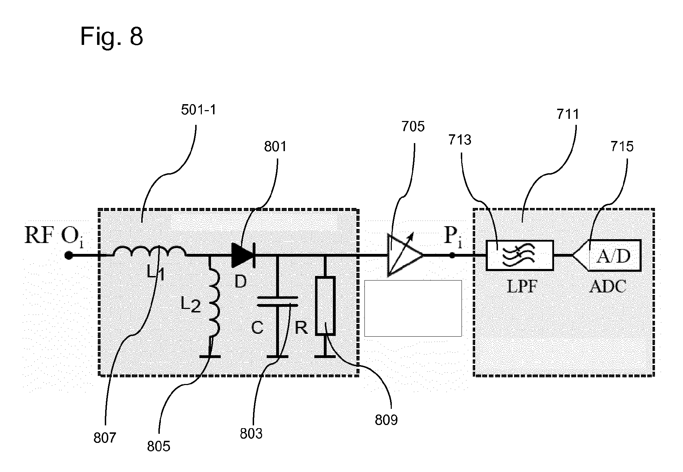

Fig. 8 zeigt einen Schaltplan einer Umsetzschaltung für die Funkfrequenz in die Digitaldomäne. Das Erfassungsmodul 711 umfasst eine Kaskade eines Tiefpassfilters 713 (LPF) und eines Analog-zu-Digitalumsetzers 715 (ADC). Als Analog-zu-Digitalumsetzer 715 kann ein Analog-zu-Digitalumsetzer verwendet werden, der 12 Bit und 680 kSa/s mit vier unterschiedlichen Eingangskanälen bietet. Ein derartiger Analog-zu-Digitalumsetzer 715 ermöglicht ein gleichzeitiges Abtasten/Sampling über alle vier Kanäle mit einer guten Auflösung und einer geeigneten Abtastrate/Samplingrate. Bei diesem Mehrfachabtasten sollten Messfehler vermieden werden. Ein Mehrfachabtasten über die vier Kanäle kann Detektions-Artefakte verhindern, wenn sich das Eingangssignal kontinuierlich ändert. Lineare, kontinuierliche Frequenzfilter mit niedrigem Rauschen und niedriger Verzerrung und Rail-zu-Rail-Eingängen und -Ausgängen können als Tiefpassfilter 713 verwendet werden, um eine Abtaststörung (Aliasing) zu vermeiden. Jede dieser Schaltungen kann ein Chip mit vier Filterstufen zweiter Ordnung aufweisen. Besonders geeignet ist ein Butterworth-Tiefpassfilter (LPF) ist mit einer Grenzfrequenz bei 50 kHz und einer Abschwächung von 91 dB bei 300 kHz Sperrbandfrequenz.

Der Dioden-Leistungsverstärker 501-1 umfasst die Diode 801, deren Kathode mit der Kapazität 803 verbunden ist. Die Anode der Diode 801 ist mit den Induktivitäten 805 und 807 verbunden. Daneben umfasst der Dioden-Leistungsdetektor 501-1 einen Widerstand 809.

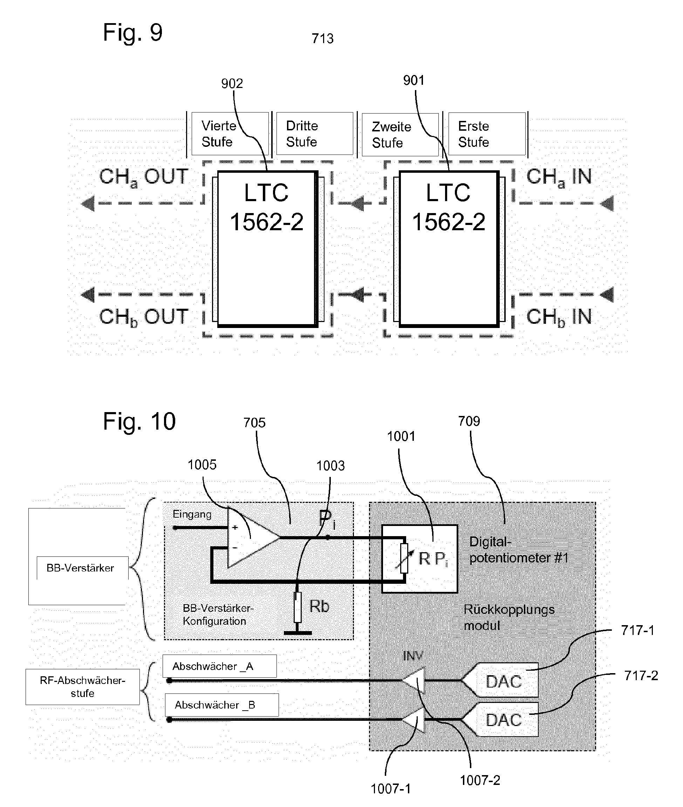

Fig. 9 zeigt eine schematische Darstellung des Aufbaus eines Tiefpassfilters 713. Das Tiefpassfilter 713 umfasst einen ersten Chip 901 mit einer ersten und einer zweiten Filterstufe und einen zweiten Chip 902 mit einer dritten und einer vierten Filterstufe. Die dritte und die vierte Filterstufe sind in dem zweiten Chip 902 implementiert, um die Weiterleitungskomplexität zu verringern. In dieser Ausführungsform werden zwei Chips 901 und 902 verwendet, um zwei Kanäle $CH_a$ und $CH_b$ zu filtern.

Fig. 10 zeigt eine schematische Darstellung des Rückkopplungsmoduls 709. Das Rückkopplungsmodul 709 basiert auf einem variablen Widerstand 1001 und zwei Digital-zu-Analogumsetzern 717-1 und 717-2 (DAC). Der variable Widerstand 1001 wird verwendet, um die Verstärkung des Basisbandverstärkers 705 (BB-Verstärker) einzustellen, während die Digital-zu-Analogumsetzer 717-1 und 717-2 verwendet werden, um die variable Abschwächer- und Verstärkungsstufe 603-1 zu steuern, die in dem Sechs-Tor-Detektor-RF-Frontendmodul 701 angeordnet ist. Als Digital-zu-Analogumsetzer 717-1 und 717-2 können zwei Dualkanal-Digital-zu-Analogumsetzer mit 8 Bit und SPI-Schnittstelle (Serial Peripheral Interface) verwendet werden, um Steuerspannungen für die variable Abschwächer- und Verstärkungsstufe 603-1 zu erzeugen. Die variable Abschwächer- und Verstärkungsstufe 603-1 erfordert eine negative Steuerspannung zwischen -3 und 0 V. Daher werden die Operationsverstärker 1007-1 und 1007-2 in invertierender Konfiguration verwendet, um eine negative Spannung bereitzustellen. Als variabler Widerstand 1001 werden zwei Mikrochip-Digitalpotentiometer mit zwei unterschiedlichen Kanälen und einer Auflösung von 8 Bit verwendet. Der Basisbandverstärker 705 umfasst einen Operationsverstärker 1005 und einen Widerstand 1003 ($R_b$) mit einem Wert von 1 kΩ. Dadurch wird eine Basisbandverstärkung erhalten, die zwischen 0 bis 100 einstellbar ist.

Das Sechs-Tor-Erfassungssystem 707 basiert auf einem Schaltungsbrett mit vier Schichten aus Epoxidharz und Glasfasergewebe (FR4-PCB). Das Schaltungsbrett wird für das duale Sechs-Tor-Detektor-RF-Frontendmodul 701 mit zwei Sechs-Tor-Modulen 500 ausgestaltet, die unabhängig arbeiten.

Zur Leistungsversorgung des Schaltungsbretts wird eine Spannungsquelle mit 6V verwendet. Ein Leistungsversorgungsmodul auf dem Schaltungsbrett erzeugt alle erforderlichen Spannungen einschließlich der Spannungen für die rauscharmen Verstärker 603-1 und 603-2 (RF-LNA), die auf dem Sechs-Tor-Detektor-RF-Frontendmodul 701 angeordnet sind. Ein zugeführter Strom kann 1,2 A betragen.

Das Schaltungsbrett wird als digitale Verarbeitungseinheit verwendet, die mit einem Computer über ein Ethernet verbunden ist. Das Schaltungsbrett weist einen FPGA-Prozessor auf. Diese Architektur ist aufgrund der verfügbaren, zahlreichen Allzweck-Eingangs-/Ausgangspins (GPIO - General Purpose Input/Output) und der parallelen Steuerfähigkeit vorteilhaft.

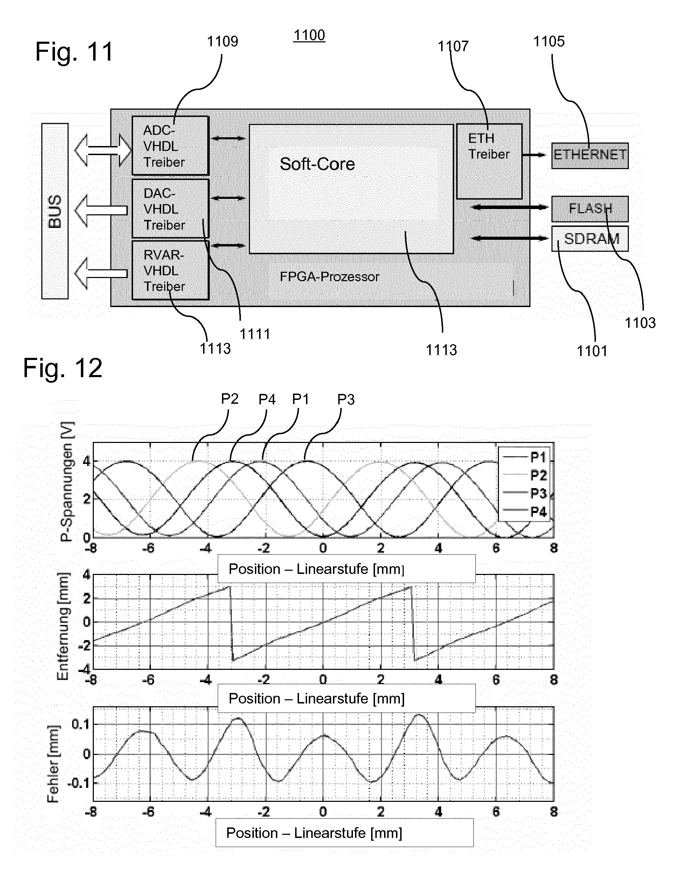

Fig. 11 zeigt eine schematische Darstellung des Aufbaus des Schaltungsbrettes 1100. Das Schaltungsbrett 1100 ist beispielsweise mit 8 Mbit SD-Ram 1101, 4 Mbit Flash 1103, 2x36 GPIO-Pins, einem SD-Kartenschlitz und Ethernet 1105 ausgestattet. Die Verbindung an das Ethernet erfolgt über einen Ethernet-Treiber 1107. Innerhalb des FPGA-Schaltungsbrettes 1100 sind VHDL-Module 1109, 1111 und 1113 (Very High Speed Integrated Circuit Hardware Description Language) implementiert.

Der ADC-VHDL-Treiber 1109 wird verwendet, um den Analog-zu-Digitalumsetzer 715 zu steuern. Dieser konfiguriert den Chip und erfasst die abgetasteten Daten P1, P2, P3 und P4. Der DAC-VHDL-Treiber 1111 wird verwendet, um den Digital-zu-Analogumsetzer 717 für die variable Abschwächer- und Verstärkungsstufe 603-1 zu konfigurieren. Der $R_{var}$-VHDL-Treiber wird verwendet, um die variablen Widerstände für den Basisbandverstärker zu steuern.

Ein Soft-Core 32-Bit-Prozessor 1113 wird innerhalb des FPGA-Schaltungsbrettes 1100 implementiert, um die abgetasteten Werte von dem ADC-VHDL-Treiber 1109 zu erhalten und die Phaseninformation zu berechnen. Zu diesem Zweck können 16-Bit-Integervariablen für die Werte P1, P2, P3 und P4 vorgesehen sein, während für das Ergebnis der ersten Subtraktion 32-Bit Gleitkommavariablen verwendet werden.

Aufgrund des Vorliegens mathematischer Operationen und Funktionen mit weitem Dynamikbereich, wie beispielsweise der Division und der Arkustangensfunktion in Gleichung (1) kann für den Rest der Berechnungen eine Gleitkommadarstellung verwendet werden. Der Prozessor 1113 kann mit einer Vorrichtung zum Beschleunigen einer Berechnungsgeschwindigkeit, wie beispielsweise einer IP Core Floating Point Module Acceleration, ausgerüstet sein, um die Berechnungsgeschwindigkeit mit Gleitkommavariablen zu verbessern.

Als Signalverarbeitungsstrategien können unterschiedliche Algorithmen in dem Prozessor 1113 implementiert sein, um die Gleichung (1) beispielsweise in C-Code zu berechnen. Diese Algorithmen umfassen beispielsweise Algorithmen für direktes Berechnen, eine polynome Annäherung und ein Nachschlagtabelle (LUT - Lookup-Tabelle).

Der Algorithmus des direkten Berechnens mit und ohne Hardware-Beschleunigung wird durch ein Schreiben des Quellcodes durch Verwenden der Standard-C-Bibliothek durchgeführt. Der geschriebene Code implementiert die Operationen sequenziell. Der Algorithmus der polynomen Annäherung verwendet eine Taylor-Reihe, um die trigonometrischen Funktionen anzunähern, wobei unterschiedliche Polynomgrade verwendet werden können.

Der Algorithmus der Nachschlagetabelle beruht darauf, dass eine Nachschlagetabelle mit einer Direktberechnungsstrategie in dem FPGA-Schaltungsbrett 1100 mit allen möglichen Kombinationen der Eingangssignale berechnet wird und in einem externen Speicher gespeichert wird, der auf dem Schaltungsbrett verfügbar ist.

Um innerhalb der Nachschlagetabelle zu suchen, werden die beiden Subtraktionen P1-P2 und P3-P4 als Indizes verwendet, um in der Nachschlagematrix zu suchen. Die Nachschlagematrix weist Spalten und Reihen mit Adressen von 12+1 Bit einschließlich eines Vorzeichenbits auf. Die Werte innerhalb der Nachschlagematrix sind 32 Bit lang, so dass insgesamt $2^{(12+1+12+1)}$x 32 Bit = 2 Gbit Speicherplatz benötigt werden. Dies entspricht ca. 268 Mbyte und ist in heutigen Datenverarbeitungssystemen ohne Probleme zu realisieren. Zusätzlich können Speicherverringerungsstrategien oder Komprimierungsstrategien implementiert werden.

Wenn sich das Ziel 615 bewegt, sollte der Doppler-Effekt berücksichtigt werden. Im Falle der vorliegenden Erfindung kann jedoch der Doppler-Effekt vernachlässigt werden, vorausgesetzt, dass das Ziel sich innerhalb eines Bereichs, der kleiner als eine Wellenlänge ist (d < λ) bewegt und eine Schwingungsfrequenz kleiner als 20 kHz ($f_v$<20 KHz) ist. Diese Vorgaben sind bei Audioanwendungen in der Regel erfüllt. Mit einer maximalen Schwingungsamplitude von $A_{max}$ = 1 mm bei einer Frequenz von $f_v$= 20 kHz ist die Maximalgeschwindigkeit des schwingenden Zieles 615:

$$v_{max} = A_{max} \cdot 2\pi \cdot f_v \approx 125.66 \, \text{m/s}. \tag{3}$$

Dies resultiert in einer maximalen Doppler-Frequenzverschiebung von:

$$f_{d_{max}} = f_s \left( 1 - \frac{c}{c \pm v_{max}} \right) \approx \pm 10.06 \, \text{kHz}, \tag{4}$$

was zu einem Unterschied Δλ in der Wellenlänge zwischen dem Referenzsignal ($\lambda_r$) bei $f_s$ = 24 GHz und dem zurückgestreuten Signal $\lambda_b$ führt, von:

$$\Delta\lambda = \lambda_r - \lambda_b = \frac{c}{f_s} - \frac{c}{f_s \pm f_{d_{max}}} \approx \pm 5.24 \, \text{nm}. \tag{5}$$

Die Auflösung für eine hochwiedergabetreue Schwingungsaufnahme liegt bei ungefähr 1 μm. Der Fehler für Audio-Anwendungen aufgrund des Doppler-Effekts liegt daher bei ungefähr 0,6% und kann vernachlässigt werden. Trotzdem verursacht der Doppler-Effekt einen Fehler in der erfassten Schwingungsfrequenz. Durch Durchführen einer Frequenzanalyse der gemessenen Schwingung ist es möglich, diesen Effekt zu bemerken. Der Fehler der erfassten Schwingungsfrequenz liegt daher für diesen Anwendungsfall bei:

$$\Delta f_v = f_v - \frac{A_{max}}{f_v^{-1}(A_{max} \pm \Delta\lambda)} \approx \pm 0.052 \, \text{Hz}. \tag{6}$$

Eine Bedingung, um korrekt den Phasenunterschied der gemessenen Spannungen P1, P2, P3 und P4 zu berechnen, ist, zu garantieren, dass die Eingangssignalamplituden |I1| und |I2| an dem Sechs-Tor-Empfänger die gleichen sind. Ansonsten kann ein Zweideutigkeitsproblem innerhalb der Periodizität der gemessenen Phase auftreten. Daher gilt die Gleichung (1) lediglich, falls die obige Bedingung erfüllt ist.

Falls |I1| ≠ |I2| und die Phase σ mit Formel (1) berechnet wird, können irreführende Ergebnisse mit einer verzerrten Systemantwort erhalten werden. Um diesen Fall zu vermeiden, tastet ein Selbstkalibrierungsalgorithmus die variable Abschwächer- und Verstärkungsstufe 603-1 an den zwei Eingängen des Sechs-Tor-Moduls 500 ab, um die linearste Antwort einer definierten Schwingungs- oder Auslenkungsmessung zu suchen. Sobald die linearste Antwort gefunden ist, werden die Abschwächungs- oder Verstärkungswerte als spezifische Einstellungswerte gespeichert. Die Kalibrierung sollte bei jeder Änderung des Mess-Szenarios wiederholt werden.

Zur Messung und Analyse kann ein DC-Leistungsanalysator mit einem integrierten, präzisen Quellmodul verwendet werden, um die vier Spannungen P1, P2, P3, P4 zu erzeugen und genaue Testwerte zu erhalten.

Die berechnete Phase σ wird über das Ethernet zu einem Computer geführt, der den Datendurchsatz und die Fehlerevaluation durchführt.

Mit einer Direktberechnungsstrategie anhand der Standard-C-Bibliothek werden 42 kSa/s Durchsatz erreicht. Mit einer eingeschalteten Hardware-Beschleunigung (HA) kann die Berechnungsrate dreimal schneller mit einem Durchsatz von 138 kSa/s durchgeführt werden. Die trigonometrische Funktion, d.h. der Arkustangens, mit einer Gleitkommadarstellung benötigt in dieser Ausführungsform ca. 70% der gesamten Berechnungszeit. Die Berechnung über eine polynome Annäherung erreicht eine bessere Leistungsfähigkeit als die Direktberechnungsstrategie mit lediglich einer linearen Annäherung des Arkustangens.

Besonders vorteilhaft ist die Berechnung über eine Nachschlagetabelle, da hierdurch die beste Leistungsfähigkeit erreicht wird. In diesem Fall wird die gleiche Fehlerleistung wie bei der Direktberechnungsstrategie und ein Datendurchsatz von 468 kSa/s erreicht. Die Leistungsfähigkeit der Berechnung über eine Nachschlagetabelle wird durch die Speicherbandbreite und die Speicherzugriffsverzögerung beeinflusst. Der Speicher ermöglicht beispielsweise eine Übertragung von 600 kSa/s, bei der jedes Sample eine Länge von 32 Bit aufweist.

Fig. 12 zeigt einen Verlauf einer linearen Bewegungsdetektion und einen Messfehler in Abhängigkeit der Position einer Linearstufe. Eine lineare Veränderung (Sweep) der Entfernung des Ziels 615 wird mittels einer computergesteuerten, hochgenauen Linearstufe durchgeführt. Durch Verwendung eines optischen Codierers und eines PID-Steuergerätes (PID -Proportional Integral Derivative) für eine Positionsrückkopplung wird eine Auflösung im Sub-Mikrometerbereich erhalten. Bei der Messung können nicht-metallische Abschirmungen und unterschiedliche dielektrische Platten, wie beispielsweise Polyurethan-Plastikschaumplatten und Holztafeln, zwischen der Radarantenne 605 und dem Ziel 615 eingesetzt werden.

Der obere Teil der Fig. 12 zeigt den Verlauf der Spannungen P1, P2, P3 und P4 in Abhängigkeit der Entfernung. Die Systemantwort ist im mittleren Teil der Fig. 12 dargestellt. Das System wird hierbei absichtlich mit einem einfachen, linearen Kalibrierungsschritt eingestellt. Daher ist es möglich, den nichtlinearen Messfehler zu beobachten, der im unteren Teil in Fig. 10 aufgetragen ist. Die Fehlerkurve ist sinusförmig und deterministisch. Daher ist es möglich, den Fehler durch eine systemspezifische Kalibrierungskurve zu kompensieren. Ist die Kalibrierungskurve einmal in dem System abgelegt, kann eine voll kalibrierte Messung durchgeführt werden. In diesem Fall ist die Antwort des Systems linear. Dies gilt auch für Einstellungskonfigurationen, die sich von derjenigen unterscheiden, in denen die nichtlineare Kalibrierung durchgeführt worden ist.

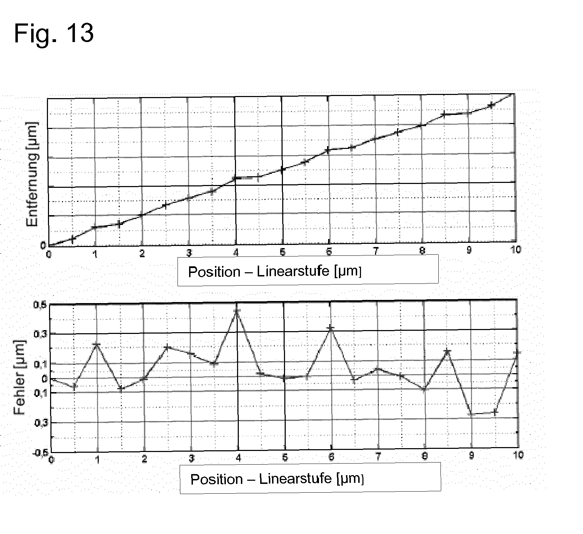

Fig. 13 zeigt den Verlauf einer hochgenauen Linearmessung und eines relativen Fehlers nach einer Kalibrierung mithilfe der Kalibrierungskurve. Der obere Teil der Fig. 13 zeigt eine gemessene Entfernung in μm in Abhängigkeit der Position der Linearstufe. Im unteren Bereich ist der Messfehler in μm in Abhängigkeit der Position der Linearstufe.

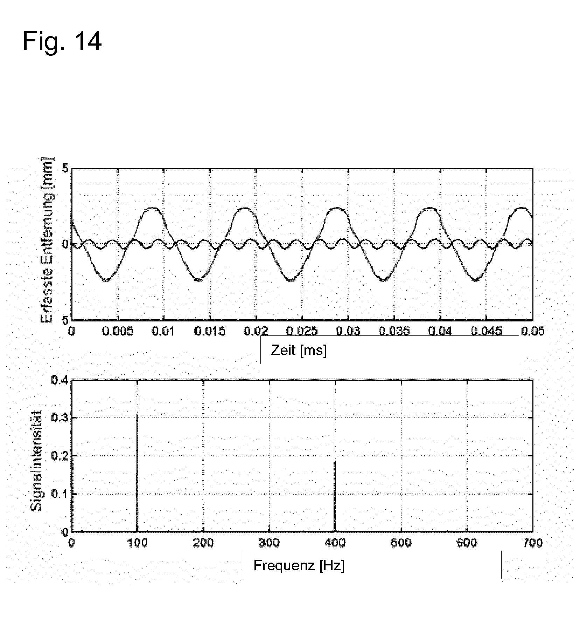

Fig. 14 zeigt eine Frequenzanalyse von Schwingungsmessungen. Bei dieser Schwingungsmessung werden mehrere sinusförmige Schwingungen auf einem Testgerät (DUT - Device under Test) induziert, beispielsweise einem High-End-Lautsprecher mit einem festen, eloxierten Aluminiumkegel als akustischer Membran.

Die Entfernung zwischen der Radarantenne 605 und dem Testobjekt als Ziel 615 beträgt annähernd 1 m. Die Leistung des von dem Radar abgestrahlten CW-Mikrowellensignals bei 24 GHz beträgt annähernd 0 dBm. In Fig. 14 ist eine Zeit- und Frequenzantwort des Systems für zwei Töne bei 100 Hz und 400 Hz aufgetragen. Diese Messung wird mit einem System durchgeführt, das mit lediglich dem linearen Kalibrierungsschritt kalibriert ist.

In diesem Fall kann eine Gesamt-Oberschwingungsverzerrung (THD - Total Harmonic Distortion) innerhalb der gesamten Bandbreite von 50 kHz einen Wert von 0,9% betragen. Dies ist niedriger als der Maximalwert von 1%, der durch die DIN45500-Norm vorgegeben wird. Dieser Wert schließt die Gesamt-Oberschwingungsverzerrung des Audioverstärkers und des High-End-Lautsprechers ein.

Für Audio-Messungen und -Aufzeichnungen werden Geräusche durch High-End-Aluminium-Lautsprecher abgespielt. Die Schwingungen des sich bewegenden Kegels werden durch den erfindungsgemäßen Aufbau aufgezeichnet und im Folgenden durch die Digitalverarbeitungseinheit rekonstruiert. Ein Spektrogramm der Geräusche kann entlang einer Zeitachse und ein Spektrogramm aufgetragen werden.

Bei einem Analysieren der Messergebnisse ist zu beachten, dass die Auslenkung der akustischen Membran gemessen wird. Die akustischen Schallwellen, die durch diese Auslenkung erzeugt werden und sich in der Luft ausbreiten, können aus dem zeitlichen Verlauf der Auslenkung rekonstruiert werden

Aufgrund der induktiven Natur des Lautsprechers findet bei niedrigeren Frequenzen, die durch den Lautsprecher ausgesendet werden, eine größere Kegelauslenkung gegenüber höheren Frequenzen statt, damit der gleiche akustische Druck erhalten wird. Durch die Messung der Auslenkung wird daher nicht unmittelbar der Schall bestimmt, den ein menschliches Ohr wahrnehmen würde. Bei einem System mit einer hochlinearen Auslenkungsaufzeichnung des Lautsprecherkegels verursacht eine direkte akustische Umwandlung der aufgenommenen Messwerte in eine Audiowiedergabe eine verstärkte Wiedergabe von tiefen Tönen und eine gedämpfte Wiedergabe von hohen Tönen.

Der akustische Druck $P_a$ wird aus der Auslenkung erhalten und hängt direkt mit der Partikelgeschwindigkeit Vp in dem Ausbreitungsmedium, d.h. der Luft, zusammen, wenn die Schallwellen übertragen werden. Die Partikelgeschwindigkeit ist die physikalische Geschwindigkeit eines Luftpaketes, wenn dieses sich in einer Richtung hin- und herbewegt, in der die Schallwelle reist.

Die Schallwelle bewegt sich relativ schnell, wohingegen Luftpartikel um ihre ursprüngliche Position mit einer relativ kleinen Partikelgeschwindigkeit oszillieren. Diese Geschwindigkeit ist die Geschwindigkeit, mit der sich der Aluminiumkegel des Lautsprechers bewegt. Diese kann mit der Partikelauslenkung $\xi$, d.h. der Auslenkung des Aluminiumkegels, für eine ebene Welle mit einer einzelnen Frequenz ($\Omega = 2\,\pi\,f$) in Bezug gesetzt werden, durch:

$$V_p = \xi \cdot \omega = \xi(2\pi \cdot f) = \frac{P_a}{Z} = \frac{A_p}{\omega},\qquad(7)$$

wobei Zdie akustische Impedanz des beschriebenen Systems in Luft ist und Ap die Partikelbeschleunigung oder die Beschleunigung des Aluminiumkegels des Lautsprechers ist.

Um den akustischen Druck $P_a$ durch Messen der Auslenkung $\xi$ zu erhalten, wird die gemessene Auslenkung bezüglich einer Zeit abgeleitet und die akustische Impedanz Z multipliziert. Unter der Annahme, dass die akustische Impedanz Z in Näherung erster Ordnung in Abhängigkeit der Frequenz konstant ist, kann die Impedanz durch einen konstanten Verstärkungsfaktor G ersetzt werden.

In diesem Fall kann für eine allgemeine Signalspreizung innerhalb des interessierenden Spektrums festgesetzt werden, dass:

$$A_p = G * \frac{\partial \xi}{\partial t},\qquad(8)$$

Dies bedeutet, dass der akustische Druck proportional zu der Zeitableitung erster Ordnung der Partikelauslenkung ist. Die aufgezeichnete Auslenkungsinformation wird daher bezüglich einer Zeit abgeleitet, um eine korrekte akustische Antwort zu erhalten.

Um das Signal geeignet zu reinigen, kann ein adaptiver Rauschbeseitigungsalgorithmus verwendet werden, so dass eine unerwünschte Interferenz vollständig gedämpft wird. Nach dem Durchführen einer Hintergrund-Rauschanalyse kann aus dem Rauschabdruck ein adaptives Software-Filter erzeugt werden. In diesem Fall entfernt das Filter die Interferenz vollständig und speichert das ursprünglich aufgezeichnete Signal.

Die resultierende Audio-Antwort ist auf ein Band unter einer Frequenz von 10 kHz begrenzt, da das adaptive Rauschbeseitigungsfilter eine Übertragungsfunktion aufweist, um die Interferenz bei einer Frequenz von 12 kHz vollständig zu dämpfen. Trotz dieser Maßnahmen ist eine akustische Evaluation möglich und eine aufgezeichnete Audioaufnahme kann schließlich mit der ursprünglichen Aufnahme verglichen werden.

Die vorliegende Erfindung stellt ein Schwingungsmessungsradar dar, das auf einem Sechs-Tor-Interferometer basiert. In einer anderen Ausführungsform können jedoch auch andere Verfahren und Vorrichtungen zum Bestimmen einer Auslenkung der Reflexionsfläche auf der Basis eines ausgesendeten Radarsignals und des reflektierten Radarsignalanteils verwendet werden.

Die dargestellte Radaranordnung arbeitet mit einem CW-Radarsignal von 24 GHz und liefert eine Mikrometerauflösung über einen Bereich von annähernd 12,5 mm. Die Auflösung wird durch die Wellenlänge des Signals bestimmt. Im Allgemeinen ist die verwendete Radarsignalfrequenz nicht auf 24 GHz beschränkt, so dass auch andere Frequenzen verwendet werden können, beispielsweise aus einem Bereich von 20 GHz bis 30 GHz oder einem Bereich von 1 GHz bis 100 GHz.

Anders als Laser-basierte, optische Interferometer arbeitet die erfindungsgemäße Vorrichtung auch dann, wenn keine direkte, optische Sichtlinie vorliegt, beispielsweise wenn zwischen Antenne und Ziel dicke und optisch nicht transparente dielektrische Platten oder nicht-metallische Abschirmungen angeordnet sind. Durch die Ausführung der dargestellten Radaranordnung wird der Vorteil erreicht, dass eine lineare Antwort mit hoher Genauigkeit erhalten wird.

Daneben wird der Vorteil erreicht, dass ein Radarstrahl auch reflektiert und dadurch eine Fläche um die Ecke herum abgetastet werden kann.

Im Allgemeinen ist die vorliegende Erfindung nicht auf die Reflexion an Membranen beschränkt, sondern es können grundsätzlich die Auslenkungen aller Gegenstände bestimmt werden, die in der Lage sind Radarwellen zu reflektieren. Die vorliegende Erfindung kann zur Schwingungsanalyse für sowohl industrielle Anwendungen als auch spezifische Audio-Aufnahmesysteme verwendet werden, bei denen eine Auslenkungsmessung mit hoher Auflösung erforderlich ist.

Zur Reflexion geeignete Gegenstände umfassen beispielsweise ein Werkstück, eine Motor- oder Getriebeoberfläche, eine Schiffsplanke oder einen Fahrzeugkarosserieabschnitt, einen Gebäudeabschnitt, insbesondere eine Gebäudewand oder eine Fensterfläche. Besonders vorteilhaft ist die Verwendung der vorliegenden Erfindung im Fahrzeugbau, da sich durch eine Schwingungsanalyse sowohl Motoren als auch Getriebe verbessern lassen, so dass Dieselmotoren eine ähnliche Laufruhe wie Benzinmotoren erreichen können.

Die vorliegende Erfindung ist nicht auf die gezeigten und beschriebenen Ausführungsformen beschränkt. Alle in Verbindung mit den Ausführungsformen beschriebenen und gezeigten Einzelmerkmale der Erfindung können in beliebiger sinnvoller Art und Weise miteinander kombiniert werden, um gleichzeitig deren vorteilhafte Wirkungen zu realisieren.

BEZUGSZEICHENLISTE

| | |
|---|---|
| 100 | Radaranordnung |
| 101 | Radarsignal/Radarwellen, zum Radarziel laufend |
| 103 | Reflexionsfläche/Membran |
| 105 | Radarsignal/Radarwellen, vom Radarziel weglaufend |
| 107 | Schallwellen |
| 109 | Antenne |
| 111 | Sende- und Empfangsvorrichtung/Radareinrichtung |
| 113 | Mittelungsvorrichtung |
| 200 | Radaranordnung |
| 203 | Reflexionsfläche/Membran |
| 209 | Antenne |
| 211 | Sende- und Empfangsvorrichtung/Radareinrichtung |
| 213 | Mittelungsvorrichtung |
| 215 | DC-Block |
| 217 | Tiefpass |
| 300 | Radaranordnung |
| 303 | Reflexionsflächen/Membranen |
| 309 | Arrayantenne |
| 311 | Sende- und Empfangsvorrichtung/Radareinrichtung |
| 313 | Mittelungsvorrichtung |
| 315 | DC-Block |
| 317 | Tiefpass |
| 319 | Steuerungsvorrichtung |
| 500 | Sechs-Tor-Interferometer-Modul 500 |
| 501-1, ..., 501-4 | Dioden-Leistungsdetektor |
| 503-1, 503-2 | rauscharmer Verstärker |
| 505-1, ..., 505-3 | Mikrowellenkoppler |
| 507 | Mikrowellenkoppler |
| 601 | digitale Signalverarbeitung |
| 603-1,603-2 | rauscharmen Verstärker |
| 605 | Sende- und Empfangsantenne |
| 607 | spannungsgesteuerter Oszillator |
| 611 | Nebel |
| 613 | Abschirmung |
| 615 | Ziel |
| 701 | Frontendmodul |
| 703 | Sechs-Tor-Detektor |

| 705 | Basisbandverstärker (BB-Verstärker) |
| 707 | Sechs-Tor-Erfassungssystem |
| 709 | Feedback-Modul/Rückkopplungsmodul |
| 711 | Erfassungsmodul |
| 713 | Tiefpassfilter |
| 715 | Anlog-zu-Digitalumsetzer |
| 717 | Digital-zu-Analogumsetzer |
| 719 | variabler Widerstand |
| 721 | Digitalbus |
| 723 | Digitalverarbeitungsplattform |
| 725 | Digitalverarbeitungseinheit |
| 801 | Diode |
| 803 | Kondensator/Kapazität |
| 805 | Spule/Induktivität |
| 807 | Spule/Induktivität |
| 809 | Widerstand |
| 901 | Chip |
| 902 | Chip |
| 1001 | variabler Widerstand |
| 1003 | Widerstand |
| 1005 | Operationsverstärker |
| 1007-1 | Operationsverstärker |
| 1007-2 | Operationsverstärker |
| 1100 | Schaltungsbrett |
| 1101 | SD-RAM |
| 1103 | Flash-Speicher |
| 1105 | Ethernet |
| 1107 | Ethernet-Treiber |
| 1109 | ADC-VHDL-Treiber |
| 1111 | DAC-VHDL-Treiber |
| 1113 | RVAR-VHDL-Treiber/Prozessor |
| P1,..., P4 | Spannungssignale proportional zur detektierten Leistung |
| S101-S105 | Verfahrensschritte |

**Patentansprüche**

1. Verfahren zur Auslenkungserfassung, mit den Schritten:

   Aussenden (S101) eines Radarsignals (101) in Richtung einer Reflexionsfläche (103);
   Empfangen (S103) eines an der Reflexionsfläche (103) reflektierten Radarsignalanteils (105); und
   Bestimmen (S105) einer Auslenkung der Reflexionsfläche (105) auf der Basis des ausgesendeten Radarsignals (101) und des reflektierten Radarsignalanteils (105).

2. Verfahren nach einem der vorstehenden Ansprüche, wobei das Radarsignal (101) in Richtung der Reflexionsfläche (103) gebündelt ausgesendet wird.

3. Verfahren nach Anspruch 1 oder 2, bei dem in dem Schritt des Bestimmens (S105) der Auslenkung eine Auslenkung aus einer Ruhelage der Reflexionsfläche (103) bestimmt wird.

4. Verfahren nach einem der vorangehenden Ansprüche, bei dem in dem Schritt des Bestimmens (S105) der Auslenkung eine gleichanteilsfreie Auslenkung, insbesondere durch Hochpassfilterung oder Bandpassfilterung zur Gleichanteilunterdrückung, bestimmt wird.

5. Verfahren nach einem der vorangehenden Ansprüche, bei dem eine Ableitung der Auslenkung nach der Zeit bestimmt wird, um eine Schallschnelle zu bestimmen.

6. Verfahren nach einem der vorangehenden Ansprüche, bei dem mehrere Radarsignale (101) in Richtung der Reflexionsfläche (103) ausgesendet werden, bei dem mehrere an der Reflexionsfläche (103) reflektierte Radarsignalanteile (105) der ausgesendeten Radarsignale (101) empfangen werden, und bei dem auf der Basis der ausgesendeten Radarsignale (101) und der empfangenen Radarsignalanteile (105) ein Verlauf der Auslenkung der Reflexionsfläche (103) über eine Zeit bestimmt wird.

7. Verfahren nach Anspruch 6, bei dem ein Auslenkungsmittelwert aus den Auslenkungen bestimmt wird.

8. Verfahren nach einem der vorangehenden Ansprüche, bei dem die Reflexionsfläche (103) mit einer vorbestimmten oder adaptiven Abtastrate abgetastet wird.

9. Verfahren nach einem der vorstehenden Ansprüche, bei dem die Reflexionsfläche (103) eine Teilfläche einer zusammenhängenden Gesamtfläche ist, und bei dem die Reflexionsfläche (103) durch eine Rasterung eines Modells der Gesamtfläche bestimmt wird.

10. Verfahren nach Anspruch 9, bei dem das Modell der Gesamtfläche eine digitale Abbildung der Gesamtfläche ist.

11. Verfahren nach einem der vorstehenden Ansprüche 9 oder 10, bei dem die Reflexionsfläche (103) unmittelbar an eine andere Reflexionsfläche der Gesamtfläche anschließt, oder bei dem die Reflexionsfläche (103) von einer anderen Reflexionsfläche der Gesamtfläche beabstandet ist.

12. Verfahren nach einem der vorstehenden Ansprüche 1 bis 8, bei dem die Reflexionsfläche (103) durch eine Schwingmembran (203), welche ausgebildet ist, elektromagnetische Wellen zu reflektieren, gebildet wird.

13. Verfahren nach einem der vorstehenden Ansprüche, bei dem die Auslenkung oder die Ableitung der Auslenkung nach der Zeit mit einem Schwellwert verglichen wird, und wobei ein Erreichen oder Überschreiten des Schwellwertes angezeigt wird.

14. Verfahren nach einem der vorangehenden Ansprüche, mit:

Aussenden einer Mehrzahl von Radarsignalen in Richtung einer Mehrzahl von Reflexionsflächen (303), wobei jeweils ein Radarsignal gebündelt in Richtung einer Reflexionsfläche (303) ausgesendet wird;
Empfangen einer Mehrzahl von an den Reflexionsflächen (303) reflektierten Radarsignalanteilen der Mehrzahl der ausgesendeten Radarsignale; und
Bestimmen der Auslenkung der jeweiligen Reflexionsfläche (303) der Mehrzahl der Reflexionsflächen (303) auf der Basis des in Richtung der jeweiligen Reflexionsfläche (303) ausgesendeten Radarsignals und des an der an der jeweiligen Reflexionsfläche (303) reflektierten Radarsignalanteils.

15. Verfahren nach Anspruch 14, bei dem die Radarsignale in Richtung der Mehrzahl von Reflexionsflächen (303) gleichzeitig oder zeitlich nacheinander, insbesondere durch eine Schwenkung einer gebündelten elektromagnetischen Welle, insbesondere Keulenschwenkung, in Richtung der jeweiligen Reflexionsfläche (303), ausgesendet werden.

16. Verfahren nach Anspruch 14 oder 15, bei dem die Mehrzahl der Radarsignale durch eine Mehrantennenanordnung (309), insbesondere durch Phasenansteuerung der Mehrantennenanordnung (309) zur Erzeugung schwenkbarer und gebündelter Radarsignale, erzeugt werden.

17. Verfahren nach einem der Ansprüche 14 bis 16, wobei die räumliche Anordnung der Reflexionsflächen (303) vorbestimmt ist, und wobei die Reflexionsflächen (303) mittels der Radarsignale abgetastet werden, um die Auslenkungen zu bestimmen.

18. Verfahren nach einem der Ansprüche 14 bis 17, wobei Reflexionsflächen (303) Teilflächen einer zusammenhängenden Gesamtfläche sind, und bei dem die Teilflächen durch die Radarsignale abgetastet werden, um die Auslenkungen zu bestimmen.

19. Verfahren nach Anspruch 18, bei dem die Rasterung der zusammenhängenden Gesamtfläche anhand eines digitalen Modells der Gesamtfläche vorgegeben oder bestimmt wird.

20. Verfahren nach einem der Ansprüche 14 bis 19, bei dem die Auslenkungen mit einem Schwellwert verglichen werden und bei dem diejenigen Teilflächen optisch oder akustisch angezeigt werden, deren Auslenkungen den Schwellwert erreichen oder überschreiten.

21. Verfahren nach einem der Ansprüche 14 bis 20, wobei die Auslenkungen zur Erfassung von Vibrationen eines Gegenstandes, insbesondere

- eines Werkstücks,
- einer Motor- oder Getriebeoberfläche,
- eines flächigen Werkstücks wie einer Schiffsplanke oder eines Fahrzeugkarosserieabschnitts,
- eines Gebäudeabschnitts, insbesondere einer Gebäudewand oder einer Fensterfläche, bestimmt werden.

22. Verfahren nach einem der Ansprüche 14 bis 17, bei dem die Reflexionsflächen (303), welche ausgebildet sind, elektromagnetische Wellen zu reflektieren und durch akustische Schallwellen auslenkbar sind, in einem dreidimensionalen Raum angeordnet sind und wobei die Reflexionsflächen zur Erfassung der Auslenkungen mit den Radarsignalen abgetastet werden, und wobei die erfassten Auslenkungen in ein räumliches akustisches Signal, insbesondere durch Ableitung nach der Zeit, überführt werden.

23. Verfahren nach Anspruch 22, wobei das akustische Signal, insbesondere in Echtzeit, über ein Kommunikationsnetzwerk ausgesendet wird.

24. Radarabtastfläche (103) mit einer Schwingmembran, welche ausgebildet ist, Radarsignale (101) zu reflektieren, einem starren Rahmen zur Halterung der Schwingmembran und einer Befestigung zur starren Befestigung der Radarabtastfläche (103) an einer Raumwandung.

25. Radaranordnung (100) zur Auslenkungserfassung, mit:

einer Radareinrichtung (111) zum Aussenden eines Radarsignals (101) in Richtung einer Reflexionsfläche (103) und zum Empfangen eines an der Reflexionsfläche (103) reflektierten Radarsignalanteils (105); und einem Prozessor (113) zum Bestimmen einer Auslenkung der Reflexionsfläche (103) auf der Basis des ausgesendeten Radarsignals (101) und des reflektierten Radarsignalanteils (105).

26. Radaranordnung (100) nach Anspruch 25, wobei die Radareinrichtung (111) eine Mehrantennenanordnung (309) umfasst, und wobei der Prozessor (113) ausgebildet ist, die Mehrantennenanordnung (309) zur Aussendung gerichteter Radarsignale anzusteuern.

27. Radaranordnung (100) nach Anspruch 25 oder 26, wobei die Radareinrichtung (111) ein 6-Tor-Interferometer (500) zur Erzeugung des Radarsignals und zum Empfang des reflektierten Radarsignalanteils umfasst.

28. Radaranordnung (100) nach Anspruch 25, 26 oder 27, wobei die Radareinrichtung (111) ausgebildet ist, eine Mehrzahl von Radarsignalen in Richtung einer Mehrzahl von Reflexionsflächen (303), insbesondere gleichzeitig oder in zeitlicher Abfolge auszusenden, wobei jeweils ein Radarsignal gebündelt in Richtung einer Reflexionsfläche (303) ausgesendet wird, eine Mehrzahl von an den Reflexionsflächen (303) reflektierten Radarsignalanteilen der Mehrzahl der ausgesendeten Radarsignale zu empfangen, und wobei der Prozessor (113) ausgebildet ist, eine Auslenkung oder einen zeitlichen Verlauf der Auslenkung einer jeweiligen Reflexionsfläche (303) der Mehrzahl der Reflexionsflächen (303) auf der Basis des in Richtung der jeweiligen Reflexionsfläche (303) ausgesendeten Radarsignals und des an der jeweiligen Reflexionsfläche reflektierten Radarsignalanteils zu bestimmen.

29. Radaranordnung (100) nach einem der Ansprüche 25 bis 28, wobei der Prozessor (113) ausgebildet ist, die Auslenkung nach der Zeit abzuleiten, um eine Schallschnelle oder einen zeitlichen Verlauf von Schallschnellen zu bestimmen.

30. Radaranordnung (100) nach einem der Ansprüche 25 bis 29, wobei der Prozessor (113) ausgebildet ist, die Auslenkung mit einem Schwellwert zu vergleichen und ein Erreichen oder ein Überschreiten des Schwellwerts anzuzeigen, insbesondere auf einer Anzeige anzuzeigen.

31. Radaranordnung (100) nach einem der Ansprüche 25 bis 30, welche eingerichtet ist, das Verfahren nach einem der Ansprüche 1 bis 23 auszuführen.

**32.** Verwendung der Radaranordnung (100) nach einem der Ansprüche 25 bis 31 als Radarmikrofon zur Erfassung von Schallsignalen, welche zumindest eine Reflexionsfläche (103) auslenken.

**33.** Verwendung der Radaranordnung (100) nach einem der Ansprüche 25 bis 31 zur Erfassung von Vibrationen eines Gegenstandes.

**34.** Computerprogramm mit einem Programmcode zum Ausführen des Verfahrens gemäß einem der Ansprüche 1 bis 23, wenn das Computerprogramm auf einem Computer abläuft.

Fig. 1

100

107   103   101   109   111   113

105

Fig. 2

200

203   209   211   213   215   217

Fig. 3

300

303    303

309    311    313    315    317

319

Fig. 4

# Fig. 5

500

Fig. 6

# Fig. 7

Fig. 8

# Fig. 9

713

902                    901

Vierte | Dritte    Zweite | Erste
Stufe | Stufe      Stufe | Stufe

CH$_a$ OUT

LTC 1562-2

LTC 1562-2

CH$_a$ IN

CH$_b$ OUT

CH$_b$ IN

# Fig. 10

705          1001    709

1005    1003

Eingang

BB-Verstärker

RP$_i$

P$_i$

Digital-potentiometer #1

BB-Verstärker-Konfiguration

Rb

Rückkopplungs modul

RF-Abschwächer-stufe

Abschwächer _A

Abschwächer _B

INV

DAC

DAC

717-1

717-2

1007-1    1007-2

Fig. 11

1109     1100     1107     1105

BUS

ADC-
VHDL
Treiber

DAC-
VHDL
Treiber

RVAR-
VHDL
Treiber

Soft-Core

FPGA-Prozessor

ETH
Treiber

ETHERNET

FLASH

SDRAM

1113     1111     1113     1101     1103

Fig. 12

P2   P4   P1   P3

P-Spannungen [V]

P1
P2
P3
P4

Position – Linearstufe [mm]

Entfernung [mm]

Position – Linearstufe [mm]

Fehler [mm]

Position – Linearstufe [mm]

27

Fig. 13

Position – Linearstufe [µm]

Position – Linearstufe [µm]

Fig. 14

| | Europäisches Patentamt European Patent Office Office européen des brevets | EUROPÄISCHER RECHERCHENBERICHT | Nummer der Anmeldung EP 12 17 4619 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/300805 A1 (LI CHANGZHI [US] ET AL) 4. Dezember 2008 (2008-12-04) | 1-3,8, 25,33,34 | INV. G01H9/00 |
| Y | * Zusammenfassung; Anspruch 1; Abbildungen 1,6 * <br> * Absätze [0001], [0016], [0032], [0033] * <br> ----- | 4-7, 9-23, 26-33 | |
| Y | US 2009/029648 A1 (KAWASAKI KENICHI [JP]) 29. Januar 2009 (2009-01-29) <br><br> * Zusammenfassung; Abbildung 1 * <br> * Absätze [0009] - [0011], [0020], [0023], [0024], [0053], [0103] * <br> ----- | 12, 21-23, 32,33 | |
| Y | GB 2 310 099 A (MECON LIMITED [GB] MECON LTD [GB]) 13. August 1997 (1997-08-13) * Zusammenfassung; Anspruch 1; Abbildung 1 * <br> ----- | 4,27 | |
| Y | EP 2 144 080 A1 (NAT INST INF & COMM TECH [JP]) 13. Januar 2010 (2010-01-13) <br><br><br> * Zusammenfassung * <br> * Absätze [0180], [0181] * <br> ----- | 6,7, 9-11,14, 15, 17-19,28 | RECHERCHIERTE SACHGEBIETE (IPC) <br> G01H G01S G01C |
| Y | US 4 222 265 A (RAVUSSIN PIERRE E) 16. September 1980 (1980-09-16) * Zusammenfassung; Abbildung 1 * <br> ----- | 5,29 | |
| Y | US 4 413 519 A (BANNISTER RONALD L [US] ET AL) 8. November 1983 (1983-11-08) * Zusammenfassung * * Spalte 5, Zeilen 2-9 * <br> ----- | 13,20, 30,31 | |
| Y | US 3 364 484 A (BEST ETHRIDGE C) 16. Januar 1968 (1968-01-16) * Zusammenfassung * * Spalte 5, Zeilen 33-39 * <br> ----- | 16,26 | |

~~Der vorliegende Recherchenbericht wurde für alle Patentan~~sprüche erstellt

| Recherchenort | Abschlußdatum der Recherche | Prüfer |
|---|---|---|
| Den Haag | 14. Juni 2013 | Fernandes, Paulo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1-23, 25-34

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 12 17 4619

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4, 25, 32, 33

   Verfahren zur Auslenkungserfassung umfassend: Aussenden eines Radarsignals, Empfangen des reflektierten Radarsignalanteils und Bestimmen der Auslenkung auf der Basis des ausgesendeten und reflektierten Radarsignals, worin die Auslenkung aus einer Ruhelage bestimmt wird.
   - - -

2. Ansprüche: 5, 29

   Verfahren zur Auslenkungserfassung umfassend: Aussenden eines Radarsignals, Empfangen des reflektierten Radarsignalanteils und Bestimmen der Auslenkung auf der Basis des ausgesendeten und reflektierten Radarsignals, worin eine Ableitung der Auslenkung nach der Zeit bestimmt wird.
   - - -

3. Ansprüche: 6-23, 26-28, 30, 31, 34

   Verfahren zur Auslenkungserfassung umfassend: Aussenden eines Radarsignals, Empfangen des reflektierten Radarsignalanteils und Bestimmen der Auslenkung auf der Basis des ausgesendeten und reflektierten Radarsignals, worin ein Modell der Gesamtfläche durch eine Rasterung bestimmt wird.
   - - -

4. Anspruch: 24

   Radarabtastfläche mit einer Schwingmembran, welche ausgebildet ist, Radarsignale zu reflektieren, einem starren Rahmen zur Halterung der Schwingmembran und einer Befestigung zur starren Befestigung der Radarabtastfläche an einer Raumwandung.
   - - -

**ANHANG ZUM EUROPÄISCHEN RECHERCHENBERICHT
ÜBER DIE EUROPÄISCHE PATENTANMELDUNG NR.**

EP 12 17 4619

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-06-2013

| Im Recherchenbericht angeführtes Patentdokument | Datum der Veröffentlichung | Mitglied(er) der Patentfamilie | Datum der Veröffentlichung |
|---|---|---|---|
| US 2008300805 A1 | 04-12-2008 | US 2008300805 A1<br>WO 2008151141 A1 | 04-12-2008<br>11-12-2008 |
| US 2009029648 A1 | 29-01-2009 | JP 4396739 B2<br>JP 2009033343 A<br>US 2009029648 A1 | 13-01-2010<br>12-02-2009<br>29-01-2009 |
| GB 2310099 A | 13-08-1997 | DE 69710713 D1<br>DE 69710713 T2<br>EP 0895095 A1<br>ES 2173390 T3<br>GB 2310099 A<br>US 5828331 A | 04-04-2002<br>24-10-2002<br>03-02-1999<br>16-10-2002<br>13-08-1997<br>27-10-1998 |
| EP 2144080 A1 | 13-01-2010 | CN 101680945 A<br>EP 2144080 A1<br>US 2010117891 A1<br>WO 2008120826 A1 | 24-03-2010<br>13-01-2010<br>13-05-2010<br>09-10-2008 |
| US 4222265 A | 16-09-1980 | CH 628983 A5<br>US 4222265 A | 31-03-1982<br>16-09-1980 |
| US 4413519 A | 08-11-1983 | JP H0330806 B2<br>JP S5827026 A<br>US 4413519 A | 01-05-1991<br>17-02-1983<br>08-11-1983 |
| US 3364484 A | 16-01-1968 | KEINE | |

EPO FORM P0461

Für nähere Einzelheiten zu diesem Anhang : siehe Amtsblatt des Europäischen Patentamts, Nr.12/82